# EUROPEAN PATENT APPLICATION

(11) **EP 3 578 512 A1**
(43) Date of publication of application: **11.12.2019**
(21) Application number: 19177660.8
(22) Date of filing: 15.02.2016
(51) Int. Cl.: C01B 32/20, C01B 32/205

(54) **GRAPHITE PRODUCTION FROM BIOMASS**

(30) Priority: 13.02.2015 NZ 15704986
(62) Divisional of application: 16749531.6
(71) Applicant: CarbonScape Limited, Marlborough 7240 (NZ)
(72) Inventor: CONNER, Gregory Thomas, 7240 Blenheim (NZ); MILLER, Ian James, 7240 Blenheim (NZ); GOMEZ, Mireia Marques, 7240 Blenheim (NZ)
(74) Representative: HGF Limited

(57) **Abstract**

The present invention relates primarily to methods of production of graphite from biomass, char or tar. The invention also provides novel apparatus and catalysts for the production of graphite from carbon-containing materials. In particular embodiments, the invention relates to the production of graphite by hydrothermal treatment of biomass to produce tar or hydrochar and graphitisation to produce graphite.

## Description

### FIELD OF THE INVENTION

The present invention relates to methods of production of graphite from biomass, char or tar.

### BACKGROUND

Graphite is one of four allotropic forms of crystalline carbon; the others are carbon nanotubes, diamonds, and fullerenes. In graphite, the carbon atoms are densely arranged in parallel-stacked, layers of hexagonally arranged carbon atoms in a planar condensed ring system of layers. When the graphite structure is only a one-atom-thick planar sheet, it is called graphene. The layers are stacked parallel to each other in a three-dimensional crystalline long-range order. There are two allotropic forms with different stacking arrangements, hexagonal and rhombohedral. Graphite is grey to black in colour, opaque, and usually has a metallic lustre; sometimes it exhibits a dull earthy lustre. Graphite occurs naturally in metamorphic rocks and is a soft mineral (with a Mohs hardness of 1 to 2) that exhibits perfect basal (one-plane) cleavage. Graphite is flexible but not elastic, has a melting point of 3,927°C, and is highly refractory (i.e. it is stable and retains its strength at high temperatures). Graphite is the most electrically and thermally conductive of the non-metals and is chemically inert. All these properties combined make graphite desirable for many industrial applications, and both natural and synthetic graphite have industrial uses (Olson 2012. U.S. Geological Survey Minerals Yearbook, p32.1).

The major uses of graphite in 2013 were, in decreasing order by tonnage, refractory applications (furnace linings), steelmaking, brake linings, foundry operations, batteries, and lubricants. These uses consumed 70% of the total natural graphite used during 2013.

There are three types of natural graphite-amorphous, flake/crystalline flake, and vein/lump. Amorphous graphite is the lowest quality and most abundant. Amorphous refers to its very small crystal size and not to a lack of crystal structure. Amorphous is used for lower value graphite products and is the lowest priced graphite. Large amorphous graphite deposits are found in China, Europe, Mexico, and the United States. The flake or crystalline form of graphite consists of many graphene sheets stacked together. Flake or crystalline flake graphite is less common and higher quality than amorphous. Flake graphite occurs as separate flakes that crystallized in metamorphic rock and can be four times the price of amorphous. Good quality flakes can be processed into expandable graphite for many uses, such as flame retardants. The foremost deposits are found in Austria, Brazil, Canada, China, Germany, and Madagascar. Vein or lump graphite is the rarest, most valuable, and highest quality type of natural graphite. It occurs in veins along intrusive contacts in solid lumps, and it is only commercially mined in Sri Lanka (Moores, 2007; China draws in the West: Industrial Minerals, no. 481, p. 38-51).

Natural graphite is mined from open pit and underground mine operations. Beneficiation processes for graphite vary from a complex four-stage flotation at European and United States mills to simple hand sorting and screening of high-grade ore at Sri Lankan operations. Certain soft graphite ores, such as those found in Madagascar, need no primary crushing and grinding. Typically, such ores contain the highest proportion of coarse flakes.

The first process to produce synthetic graphite was invented in the mid-1890s by Edward Goodrich Acheson. He discovered that by heating carborundum to high temperatures, at about 4,150°C, the silicon vaporizes and leaves behind graphite. Synthetic graphite electrodes that carry the electricity that melts scrap iron and steel or direct-reduced iron in electric arc furnaces are made from petroleum coke mixed with coal tar pitch. The mixture is extruded and shaped, then baked to carbonize the pitch, and finally graphitized by heating it to temperatures approaching 3,000 °C, to convert the carbon to graphite. Synthetic graphite powder is made by heating powdered petroleum coke above the temperature of graphitization (3,000 °C).

The expected increase in manufacture and sales of hybrid and electric vehicles is likely to increase demand for high-purity graphite in fuel-cell and battery applications. Fuel cells are a potential high-growth, large-volume graphite (natural and synthetic) end use. Batteries are expected to be the fastest increasing end-use sector owing to growth in portable electronics that require larger, more powerful and more graphite-intensive batteries. Both synthetic and natural graphite are used in these batteries although synthetic graphite has naturally better conductivity when compared to most natural graphite so is preferred for use in batteries.

Brake linings and other friction materials are expected to steadily use more natural graphite as new automobile production continues to increase and more replacement parts are required for the increasing number of vehicles. Natural graphite (amorphous and fine flake) is used as a substitute for asbestos in brake linings for vehicles heavier than cars and light trucks.

Specialised and high-tech applications (such as advanced carbon graphite composites and lithium-ion batteries) require higher purity and more consistent products than is typically found in natural graphite deposits. Recent advances in synthetic graphite production technology have allowed the production of specialised, hybrid forms of synthetic graphite which impart desirable properties. These are particularly useful for lithium-ion batteries such as those used in electric vehicles.

There is considerable concern over the current volume of greenhouse gas emissions and the effect that these may have on the global climate. Carbon dioxide (CO₂) is the principal greenhouse gas driving anthropogenic climate change and represents around 70% of all greenhouse gases generated globally. To achieve lasting reductions in carbon dioxide, wide scale changes in the world's patterns of fossil fuel use will be needed. For example, use of renewable energy will need to be promoted, as well as increased energy efficiency and the development of fossil fuel alternatives.

There are efforts underway to reduce reliance on fossil fuels such as the petroleum coke used for the production of synthetic graphite. Using biomass to produce graphite has the advantage that it fixes carbon from the atmosphere rather than using fossil fuels. Further, when synthetic graphite is employed in hybrid fuel-cell vehicle batteries, this assists in the movement away from fossil fuel burning vehicles towards vehicles with very low emissions and pollutants.

It is an object of the invention to provide a method for the production of graphite, graphite produced by that method, or to at least provide the public with a useful choice.

### SUMMARY OF INVENTION

In a first aspect, the invention provides a method of producing graphite comprising heating at least one of char, tar and biomass in the presence of a catalyst to a temperature sufficient to produce graphite, wherein the catalyst catalyses the conversion of the at least one or char, tar and biomass to graphite.

In a particular embodiment, the char is hydrochar.

In a particular embodiment, the catalyst is introduced to or impregnated into the at least one of char, tar and biomass.

In a particular embodiment, the heating is carried out in a graphitisation reactor.

In a particular embodiment, the hydrochar comprises ash content selected from the group consisting of less than 10%, less than 5%, less than 1%, less than 0.9%, less than 0.8%, less than 0.7%, less than 0.6%, less than 0.5%, less than 0.4%, less than 0.3%, less than 0.2%, less than 0.1%

In a particular embodiment, the char, tar or biomass has been delignified. In a particular embodiment, the delignified char or biomass comprises a lignin content of less than 15%, less than 10%, less than 9%, less than 5%, less than 2% or less than 1%.

In a particular embodiment, the char has an internal surface area selected from the group consisting of greater than 200m²/g, greater than 300m²/g, greater than 400m²/g, greater than 500m²/g, greater than 600m²/g, greater than 700m²/g, greater than 800m²/g, greater than 900m²/g, less than 1000m²/g, less than 900m²/g, less than 800m²/g, less than 700m²/g, less than 600m²/g, less than 500m²/g, less than 400m²/g, less than 300m²/g, between 200m²/g and 1000m²/g, between 200m²/g and 800m²/g, between 200m²/g and 600m²/g, between 200m²/g and 400m²/g, between 400m²/g and 1000m²/g, between 400m²/g and 800m²/g, or between 400m²/g and 600m²/g.

In a particular embodiment, the catalyst comprises a transition metal catalyst, wherein the catalyst is in ionic form and reacts with hydrochloric acid to form a chloride salt. In a particular embodiment, the catalyst in ionic form has a valence of less than three. In a particular embodiment, the catalyst is selected from the group consisting of a transition metal catalyst, iron (III) nitrate, nickel nitrate, chromium nitrate, chromium chloride, manganous acetate (Mn(CH₃COO)₂), cobaltous nitrate (Co(NO₃)₂), nickel chloride (NiCl₂) or combinations thereof. In a particular embodiment, the catalyst is provided at a concentration of at least 0.1M, at least 1.0M, at least 1.5M, at least 2.0M, at least 2.5M, or at least 2.8M.

In a particular embodiment, the catalyst is introduced to the char, tar or biomass by treating the char, tar or biomass with an aqueous solution containing the catalyst. Preferably, the treatment comprises soaking the char, tar or biomass in the solution for a period sufficient for the catalyst to impregnate the char, tar or biomass substantially throughout. Preferably, the soaking period is selected from the group consisting of approximately 10 minutes, approximately 30 minutes, approximately 1 hour, approximately 2 hours, approximately 4 hours, approximately 6 hours, approximately 12 hours, approximately 24 hours, approximately 48 hours, between 10 minutes and 72 hours or between 12 and 24 hours.

In a particular embodiment, the catalyst is introduced to or impregnated into the char, tar or biomass by soaking the biomass, tar or char in a solution containing the catalyst. Preferably the introduction or impregnation is carried out under vacuum of between -0.5 Bar to -0.99 Bar.

In a particular embodiment, the catalyst is removed from the hydrochar prior to graphitisation.

In a particular embodiment, the catalyst is introduced to tar remaining after hydrothermal treatment of biomass by blending tar with a solution containing the catalyst. Preferably the introduction or impregnation is carried out at or above the melting point of the tar.

In a particular embodiment, the biomass or char is heated to a temperature sufficient to produce graphite. Preferably, the temperature sufficient to produce graphite is selected from the group consisting of greater than 600°C, greater than 800°C, greater than 1000°C, greater than 1100°C, greater than 1200°C, greater than 1300°C, greater than 1400°C, greater than 1500°C, greater than 1600°C, greater than 1700°C, greater than 1800°C, greater than 1900°C, greater than 2000°C, greater than 2100°C, greater than 2200°C, greater than 2300°C, greater than 2400°C, greater than 2600°C, greater than 2800°C, greater than 3000°C, less than 3200°C, less than 3000°C, less than 2500°C, less than 1100°C, less than 1200°C, less than 1300°C, less than 1400°C, less than 1500°C, less than 1600°C, less than 1700°C, less than 1800°C, less than 1900°C, less than 2000°C, less than 2100°C, less than 2200°C, less than 2300°C, less than 2400°C, approximately 1000°C, approximately 1100°C, approximately 1200°C, approximately 1300°C, approximately 1400°C, approximately 1500°C, approximately 1600°C, approximately 1700°C, approximately 1800°C, approximately 1900°C, approximately 2000°C, approximately 2100°C, approximately 2200°C, approximately 2300°C, approximately 2400°C, approximately 2500°C, approximately 2600°C, approximately 2800°C, approximately 3000°C, approximately 3200°C, between 600°C and 3200°C, between 1000°C and 2500°C, between 1000°C and 2000°C, between 1000°C and 1500°C, between 1200°C and 2500°C, between 1200°C and 2000°C, between 1200°C and 1500°C, between 1200°C and 1400°C, between 1300°C and 1500°C, and between 1300°C and 2500°C.

In a particular embodiment, the biomass, tar or char is heated by electromagnetic radiation or by hybrid heating. Preferably the electromagnetic radiation is sufficient to heat the biomass, tar or char to a temperature at which graphitisation occurs.

In a particular embodiment, the char, tar or biomass is heated by hybrid heating.

In a particular embodiment, the char, tar or biomass is held within a receptacle adapted for temperatures at which graphitisation occurs. Preferably the receptacle is constructed from a heat-resistant material selected from the group consisting of quartz, silica nitride (Si₃N₄), alumina, graphite and O-SiAlON.

In a particular embodiment, the char, tar or biomass is heated in an inert atmosphere in the graphitisation reactor. Preferably, the inert atmosphere comprises an inert gas which is selected from the group consisting of nitrogen gas, noble gases, helium gas, neon, krypton, xenon and argon gas. Preferably, the inert gas is passed through the reactor. Preferably, the flow rate of the inert gas is sufficient to achieve and maintain an inert atmosphere throughout the heating process. Preferably, the flow rate is approximately 12L per minute. Preferably, the inert atmosphere comprises a partial or substantially complete vacuum.

In a particular embodiment, the graphite produced comprises a hexagonal crystal structure. In a particular embodiment, the graphite produced comprises x-ray diffraction miller indices of 0,0,2, 1,0,1 and 0,0,4 as measured using x-ray diffraction spectroscopy. Preferably, the 0,0,2 index is prominent compared to the other two indices. In a particular embodiment, the graphite produced comprises an inter-layer spacing (d-spacing) of between 0.333nm and 0.337nm, less than 0.34nm, less than 0.337nm or approximately 0.335nm. In a particular embodiment, the graphite produced comprises a crystal size of at least 0.246nm. In a particular embodiment, the graphite produced comprises a proportion of crystallinity of between 67% to 99.9%, or between 75% to 99.9%. In a preferred embodiment the proportion of crystallinity is greater than 87%. In a particular embodiment, the graphite produced comprises electrical resistivity of less than 50milliohmmetres (Ω·m).

In a particular embodiment, the graphite produced comprises an ash content selected from the group consisting of less than 1%, less than 0.9%, less than 0.8%, less than 0.7%, less than 0.6%, less than 0.5%, less than 0.4%, less than 0.3%, less than 0.2%, less than 0.1% or between 1% and 0.0005%. In a preferred embodiment, the graphite produced comprises an ash content of between 1% and 0.0005%.

In a particular embodiment, the method comprises a step of removal of the catalyst from the graphite removal of the catalyst from the graphite. In a particular embodiment, the graphite is substantially free of catalyst following the step of removal of the catalyst. In some embodiments, the concentration of the catalyst is reduced to between 0.5% w/w to 1% w/w catalyst to graphite. In particular embodiments, the catalyst concentration is between 0.03% and 0.1%, less than 0.3% w/w, less than 0.1% less than 0.01% or less than 0.001% w/w. In a particular embodiment, the catalyst is removed by treatment of the graphite in acid for a period. Preferably, the acid comprises hydrochloric acid. Preferably, the hydrochloric acid is at a concentration of between 0.1M and 12M in aqueous solution.

In a particular embodiment, the treatment of the graphite in acid comprises vacuum soaking of graphite in acid.

In a particular embodiment, the period of acid treatment is sufficient to form a compound capable of removal by a solvent. Preferably, the period is between 10 minutes and 24 hours. In an alternative embodiment, the period is selected from the group consisting of greater than 5 minutes, greater than 10 minutes, greater than 15 minutes, greater than 30 minutes, greater than 1 hour, greater than 2 hours, greater than 6 hours, greater than 12 hours, less than 24 hours, less than 12 hours, less than 6 hours, less than 2 hours, less than 1 hour, less than 30 minutes, less than 15 minutes, between 5 minutes and 24 hours, between 5 minutes and 12 hours, between 5 minutes and 2 hours, between 5 minutes and 6 hours, between 5 minutes and 12 hours, between 10 minutes and 15 minutes, between 10 minutes and 30 minutes, between 10 minutes and 1 hour, and between 10 minutes and 2 hours.

In a particular embodiment, the step of removal of the catalyst further comprises the removal of the graphite from the acid and washing the graphite with aqueous solution.

In a particular embodiment, the step of removal of the catalyst further comprises drying the graphite for a period sufficient to drive out any residual solvent. Preferably, the graphite is dried to a moisture content of less than 5%. In a particular embodiment, the moisture content is selected from the group consisting of less than 4%, less than 3%, between 1% and 5%, between 2% and 4%, and between 1% and 3%.

In a particular embodiment, the method of the first aspect further comprises a pre-treatment step comprising producing hydrochar or tar from biomass by hydrothermal carbonisation (HTC), wherein the hydrochar or tar then undergoes heating to produce graphite.

In a particular embodiment, the hydrochar or tar is produced by heating the biomass in aqueous solution under pressure to a temperature and pressure sufficient to produce the hydrochar or tar.

In a particular embodiment, the hydrochar or tar is produced by:
a. introducing biomass and aqueous solution to a hydrothermal reactor;
b. heating the biomass and aqueous solution under pressure to a temperature and pressure sufficient to produce at least one of hydrochar and tar.

In a particular embodiment, the biomass and aqueous solution are introduced to the hydrothermal reactor together, simultaneously or sequentially in any order.

In a particular embodiment, the catalyst is introduced to the hydrothermal reactor prior to step b.

In a particular embodiment, the catalyst is introduced to the biomass and aqueous solution prior to or during hydrothermal carbonisation. This step achieves catalyst impregnation in the hydrochar or tar produced.

In a particular embodiment, the hydrochar or tar is produced by heating the biomass and aqueous solution to a temperature of between 180°C and 400°C. In a particular embodiment, the temperature is selected from the group consisting of greater than 180°C, greater than 200°C, greater than 250°C, greater than 300°C, greater than 350°C, greater than 350°C, less than 400°C, less than 350°C, less than 300°C, less than 250°C, between 180°C and 400°C, between 180°C and 350°C, between 180°C and 300°C, between 180°C and 250°C, between 250°C and 400°C, between 250°C and 350°C, between 250°C and 300°C, between 300°C and 400°C.

In a particular embodiment, the HTC reactor is heated by a heating means. Preferably the heating means comprises an electromagnetic radiation generator, a resistive electric heating element, or a hybrid heating means.

In a particular embodiment, the hydrothermal reactor pressure is manually or automatically regulated by ingress or egress of gas into the hydrothermal reactor.

In a particular embodiment, the hydrothermal reactor pressure is autogenously regulated by modulation of the temperature of the hydrothermal reactor.

In a particular embodiment, the hydrochar or tar is produced by pressurising the biomass and aqueous solution to a pressure between 1000kPa and 40000kPa. In a particular embodiment, the pressure is selected from the group consisting of greater than 1000kPa, greater than 2000kPa, greater than 5000kPa, greater than 10000kPa, greater than 15000kPa, greater than 20000kPa, greater than 25000kPa, greater than 30000kPa, greater than 35000kPa, less than 40000kPa, less than 35000kPa, less than 30000kPa, less than 25000kPa, between 1000kPa and 40000kPa, between 1000kPa and 28000kPa, between 20000kPa and 40000kPa, between 20000kPa and 35000kPa, between 20000kPa and 30000kPa, between 25000kPa and 40000kPa, between 25000kPa and 35000kPa, between 25000kPa and 30000kPa, and between 30000kPa and 40000kPa.

In a particular embodiment, the HTC temperature and pressure is maintained for a period of between 5 minutes and 15 minutes. In an alternative embodiment, the period is selected from the group consisting of greater than 1 minute, greater than 5 minutes, greater than 10 minutes, greater than 15 minutes, greater than 30 minutes, greater than 1 hour, greater than 2 hours, greater than 6 hours, greater than 12 hours, less than 12 hours, less than 6 hours, less than 2 hours, less than 1 hour, less than 30 minutes, less than 15 minutes, less than 10 minutes, between 5 minutes and 30 minutes, between 5 minutes and 1 hour, between 5 minutes and 2 hours, between 5 minutes and 6 hours, between 5 minutes and 12 hours, between 10 minutes and 15 minutes, between 10 minutes and 30 minutes, between 10 minutes and 1 hour, and between 10 minutes and 2 hours.

In a particular embodiment, the method further comprises the step of quenching the reaction with a coolant media to quench the reaction. In particular embodiments, the coolant media comprises a refrigerant gas, dry ice, glycol or aqueous solution.

In a particular embodiment, the method further comprises the step of venting gases from the reactor by way of a gas outlet.

In a particular embodiment, the method further comprises the step of separating the solids from the aqueous phase.

In a particular embodiment, the method further comprises the step of drying the hydrochar.

In a particular embodiment, the hydrochar is dried for a period sufficient to reduce the moisture content to a moisture content of less than 10%. In a particular embodiment, the moisture content of the dried hydrochar is selected from the group consisting of less than 5%, less than 3%, less than 2%, less than 1%, between 0% and 10%, between 0% and 5%, between 0% and 2%, between 1% and 10%, between 1% and 5%, between 1% and 2%, between 2% and 10%, and between 2% and 5%. Preferably, the hydrochar is dried for a period of 12-24 hours.

In a particular embodiment, the hydrochar is mechanically de-watered and optionally passed through a drying oven.

In a second aspect, the invention provides a method of producing graphite comprising:
a. introducing biomass and aqueous solution to a hydrothermal reactor;
b. heating the biomass and aqueous solution under pressure to a temperature and pressure sufficient to produce at least one of hydrochar and tar;
c. introducing a catalyst to the hydrochar or tar;
d. heating the hydrochar or tar, and the catalyst to a temperature sufficient to produce graphite.

In a particular embodiment, the biomass and aqueous solution are introduced to the hydrothermal reactor together, simultaneously or sequentially in any order.

In a particular embodiment, the biomass and aqueous solution is heated by electromagnetic radiation.

In a particular embodiment, the hydrochar is heated by electromagnetic radiation or hybrid heating.

Any of the embodiments of the first aspect are also intended to apply to the method of the second aspect.

In a third aspect, the invention provides a system for the production of graphite, the system comprising:
a. a graphitisation reactor adapted to receive char, tar or biomass; and
b. a graphitisation heating means capable of heating the char to a temperature sufficient to produce graphite.

In a particular embodiment, the system further comprises:
c. a hydrothermal reactor capable of producing hydrochar.

In a particular embodiment, the hydrothermal reactor comprises at least one aperture capable of receiving biomass.

In a particular embodiment, the hydrothermal reactor further comprises one or more gas conduits for transfer of gases to or from the reactor.

In a particular embodiment, the graphitisation reactor comprises a receptacle adapted to receive char. Preferably the receptacle is constructed from a heat-resistant material selected from the group consisting of quartz, silica nitride (Si₃N₄), alumina, graphite and O-SiAlON.

In a particular embodiment, the graphitisation heating means comprises a resistive electric heating element.

In a particular embodiment, the graphitisation heating means comprises an electromagnetic radiation generator. Preferably, the electromagnetic radiation generator comprises at least one of a magnetron oscillator and a radio frequency oscillator. In particular embodiments, the radio frequency oscillator comprises a triode or a pentode.

In a particular embodiment, the electromagnetic radiation generator is associated with the graphitisation reactor and adapted to, in use, apply electromagnetic radiation to the char, tar or biomass.

In a particular embodiment, the electromagnetic radiation generator is associated with the graphitisation reactor by way of a waveguide.

In a particular embodiment, the graphitisation reactor comprises an outer container and one or more refractive liners contained within the outer container. Preferably, the one or more refractive liners comprises alumina, graphite or silica nitride.

In a particular embodiment, the one or more refractive liners partially or completely surround the receptacle.

In a particular embodiment, the outer container comprises at least one aperture adapted for insertion or removal of char, tar or biomass.

In a particular embodiment, the outer container comprises at least one microwave transparent window. Preferably, the microwave transparent window is made from quartz, silica nitride (Si₃N₄), alumina, O-SiAlON or Mica.

In a particular embodiment, the graphitisation reactor comprises an outer container and an electromagnetic cavity defining an inner portion of the reactor. Preferably, the electromagnetic cavity is proportioned to act as a circular waveguide. Preferably the cavity sets up one or more resonant electromagnetic radiation propagation modes for heating the char. In particular embodiments, the mode comprises a TE₀₁₀ or TE₁₁ electromagnetic radiation propagation mode.

In a particular embodiment, the graphitisation reactor comprises one or more gas inlets to facilitate the transfer of gases into the container.

In a particular embodiment, the graphitisation reactor comprises one or more gas outlets to facilitate the transfer of gases out of the container.

In a particular embodiment, the hydrothermal reactor comprises a pressure-sealable reaction container and an HTC heating means.

In a particular embodiment, the HTC heating means comprises an electromagnetic radiation generator or a conventional heating means. Preferably, the electromagnetic radiation generator comprises at least one of a magnetron oscillator and a radio frequency oscillator. In particular embodiments, the radio frequency oscillator comprises a triode or a pentode.

In a particular embodiment, the HTC heating means comprises a resistive electric heating element.

In a fourth aspect, the invention provides a system for the production of graphite, the system comprising:
a. a hydrothermal reactor capable of producing at least one of hydrochar and tar,
b. a graphitisation reactor adapted to receive hydrochar or tar from the hydrothermal reactor; and
c. a heating means capable of heating the hydrochar or tar to a temperature sufficient to produce graphite,
wherein the hydrothermal reactor comprises an aperture capable of receiving biomass, and
wherein the heating means comprises an electromagnetic radiation generator.
Embodiments of the third aspect are also applicable to the fourth aspect.

In a fifth aspect, the invention provides graphite produced by a method described in the first or second aspect. In particular embodiments, the graphite comprises x-ray diffraction miller indices of 0,0,2, 1,0,1 and 0,0,4 as measured using x-ray diffraction spectroscopy. Preferably, the 0,0,2 index is prominent compared to the other two indices. In a particular embodiment, the graphite produced comprises an inter-layer spacing (d-spacing) of between 0.333nm and 0.337nm, less than 0.34nm, less than 0.337nm or approximately 0.335nm. In a particular embodiment, the graphite produced comprises a crystal size of at least 0.246nm. In a particular embodiment, the graphite produced comprises a proportion of crystallinity of between 67% to 99.9%, or between 75% to 99.9%. In a preferred embodiment the proportion of crystallinity is greater than 87%. In a particular embodiment, the graphite produced comprises electrical resistivity of less than 50milliohmmetres (Ω·m).

In a sixth aspect, the invention provides a method for the conversion of biomass to graphite, the method comprising:
a. converting the biomass to hydrochar in a hydrothermal reactor;
b. impregnating the hydrochar with a catalyst;
c. heating the catalyst-treated hydrochar to a temperature sufficient to produce graphite.
Embodiments of the first aspect are also applicable to the sixth aspect.

In a seventh aspect, the invention provides a method for the conversion of biomass to graphite, the method comprising:
a. delignifying the biomass;
b. heating the biomass in the presence of a catalyst to a temperature sufficient to produce graphite;
wherein the catalyst catalyses the conversion of the biomass to graphite.
Embodiments of the first aspect are also applicable to the seventh aspect.

In an eighth aspect, the invention provides a method for the conversion of a carbon containing compound to graphite, the method comprising heating the carbon-containing compound in the presence of a catalyst to produce graphite, wherein the catalyst is selected from the group consisting of manganous acetate (Mn(CH₃COO)₂) and nickel chloride (NiCl₂).

In a particular embodiment of the eighth aspect, the carbon-containing compound is biomass or hydrochar.

In a particular embodiment of the eighth aspect, the graphite produced comprises x-ray diffraction miller indices of 0,0,2, 1,0,1 and 0,0,4 as measured using x-ray diffraction spectroscopy. Preferably, the 0,0,2 index is prominent compared to the other two indices. In a particular embodiment, the graphite produced comprises an inter-layer spacing (d-spacing) of between 0.333nm and 0.337nm, less than 0.34nm, less than 0.337nm or approximately 0.335nm. In a particular embodiment, the graphite produced comprises a crystal size of at least 0.246nm. In a particular embodiment, the graphite produced comprises a proportion of crystallinity of between 67% to 99.9%, or between 75% to 99.9%. In a preferred embodiment the proportion of crystallinity is greater than 87%. In a particular embodiment, the graphite produced comprises electrical resistivity of less than 50milliohmmetres (Ω.m).

The embodiments referred to herein are intended to be read in conjunction with any of the aspects or other embodiments.

The invention may also be said broadly to consist in the aspects, embodiments, parts, elements and features referred to or indicated in the specification of the application, individually or collectively, in any or all combinations of two or more of said aspects, embodiments, parts, elements or features, and where specific integers are mentioned herein which have known equivalents in the art to which the invention relates, such known equivalents are deemed to be incorporated herein as if individually set forth.

### BRIEF DESCRIPTION OF THE FIGURES

These and other aspects of the present invention, which should be considered in all its novel aspects, will become apparent from the following description, which is given by way of example only, with reference to the accompanying figures, in which:
Figure 1 shows a schematic diagram of an embodiment of the invention.
Figures 2-4 and 6 show x-ray diffraction spectra of graphite samples produced by the methods of the invention.
Figure 5 shows an x-ray diffraction spectrum of a graphite reference sample.
Figure 6 shows an XRD spectrum of a sample of biomass that has undergone HTC and graphitisation according to the methods described in example 2. All XRD figures show 2-theta on the x-axis and linear counts on the y-axis.

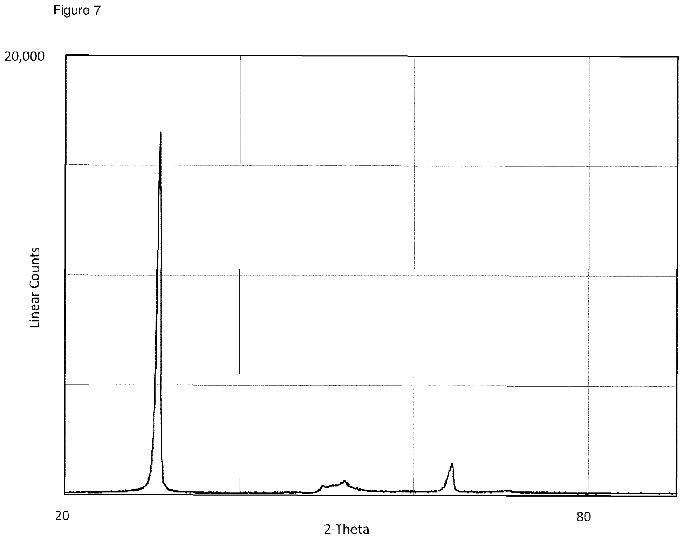

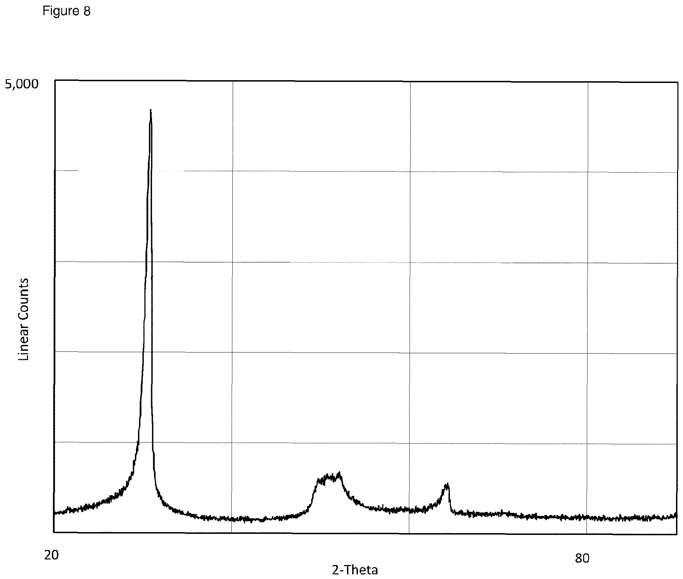

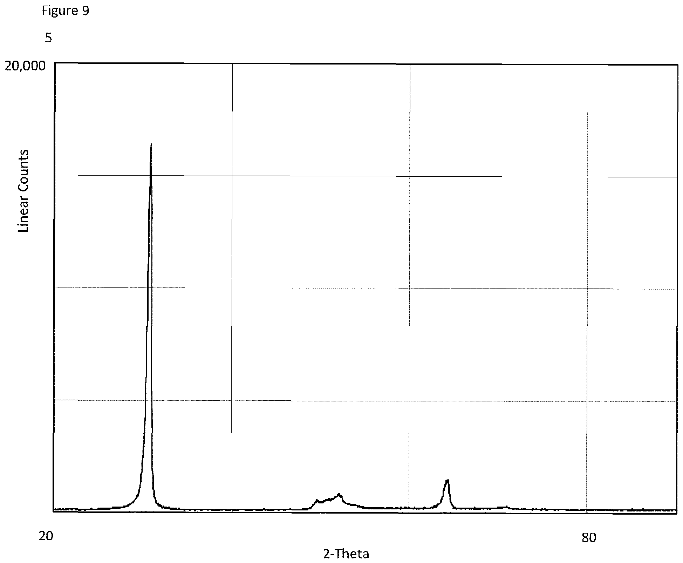

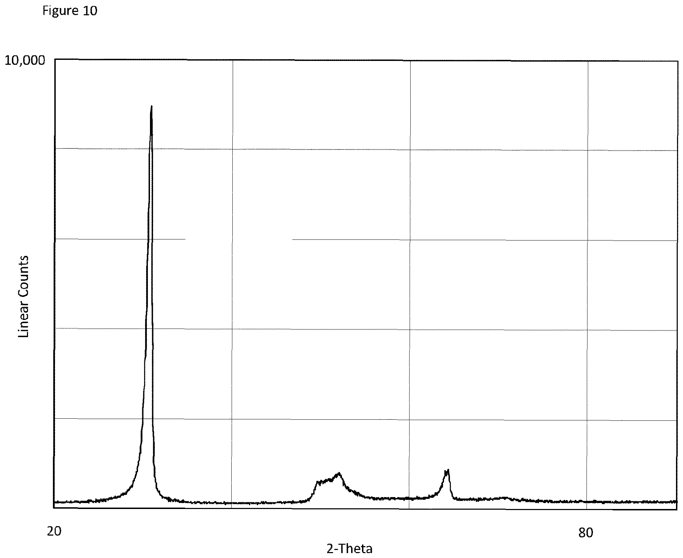

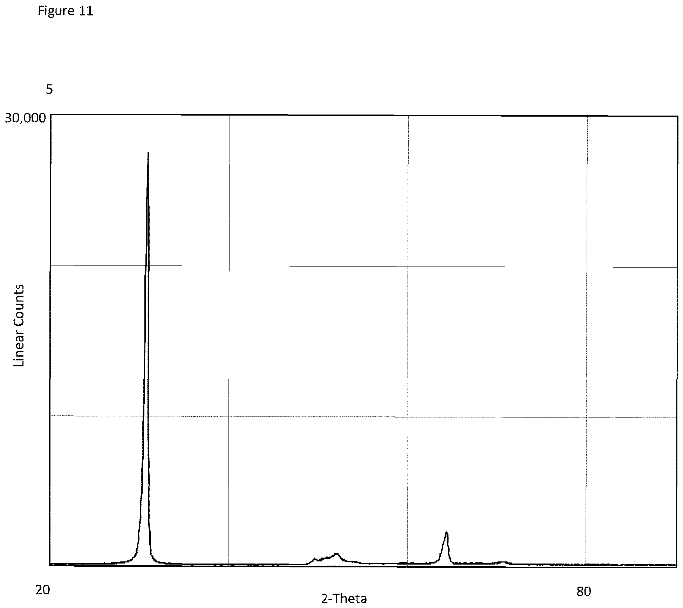

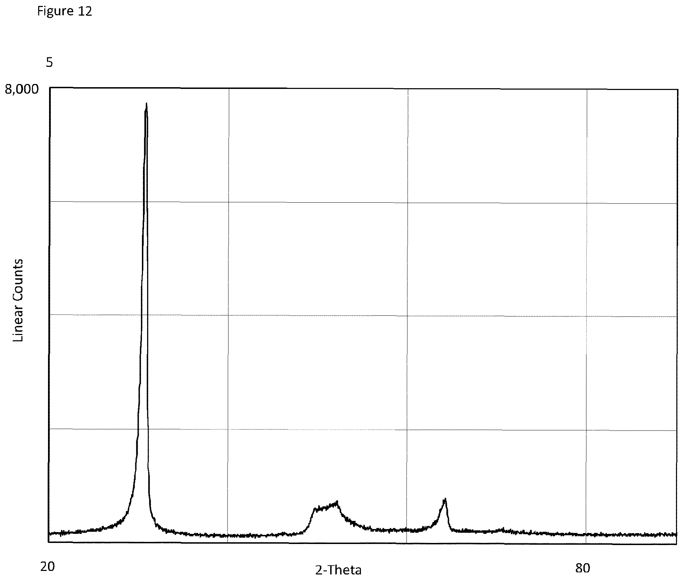

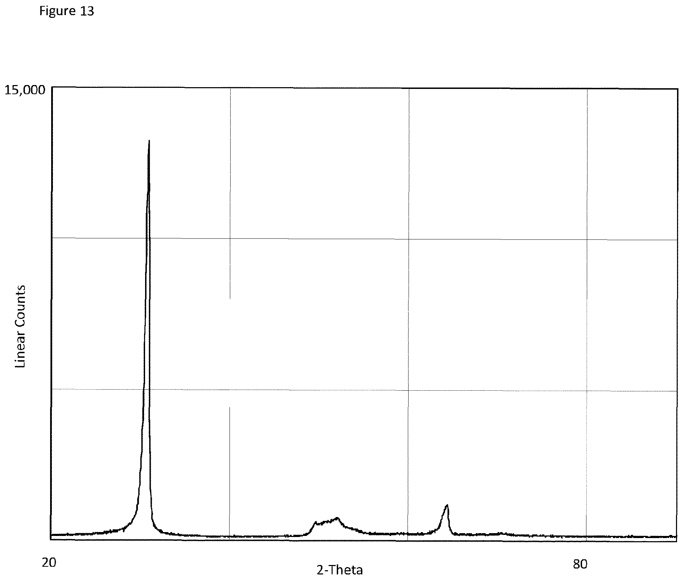

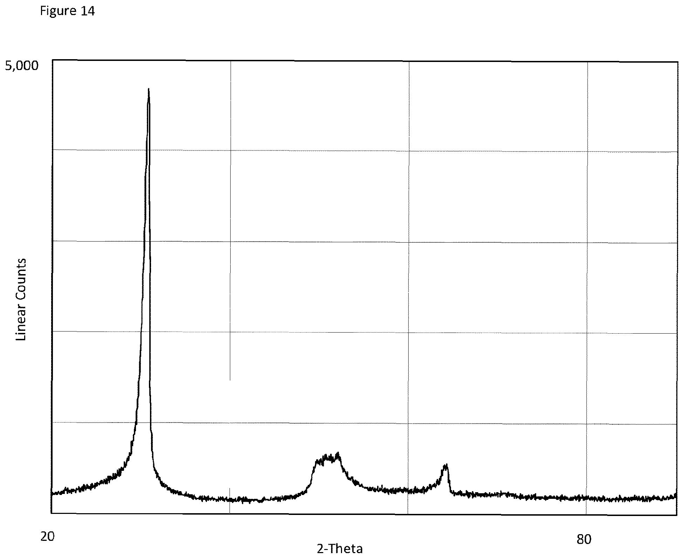

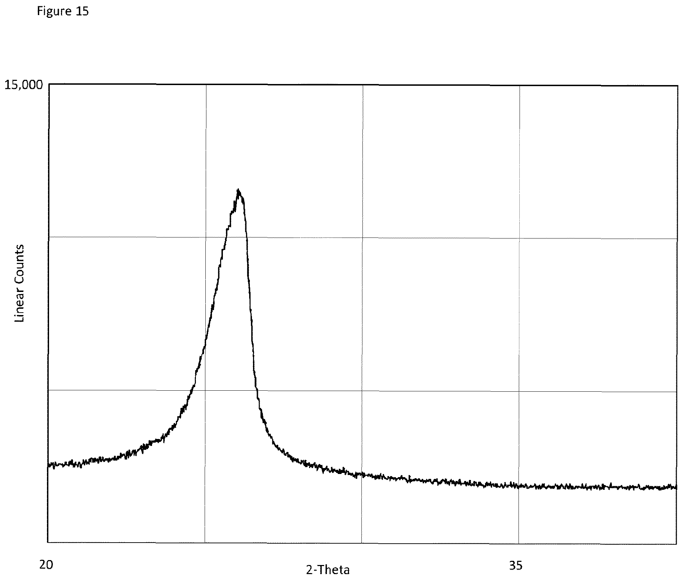

Figures 7-15 show XRD spectra of samples of graphite produced using increased graphitisation temperatures (1500, 1800C) and increased Ferric Nitrate concentration.

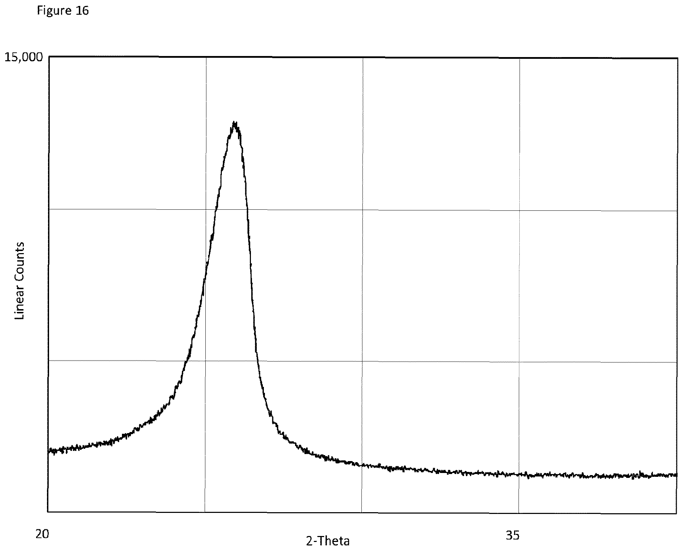

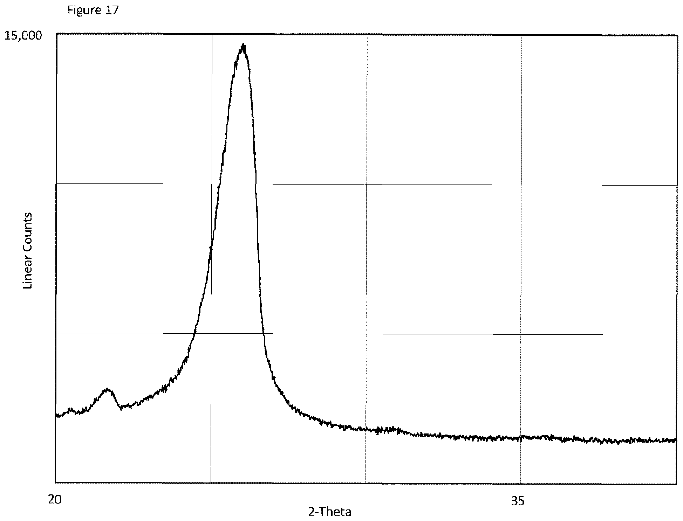

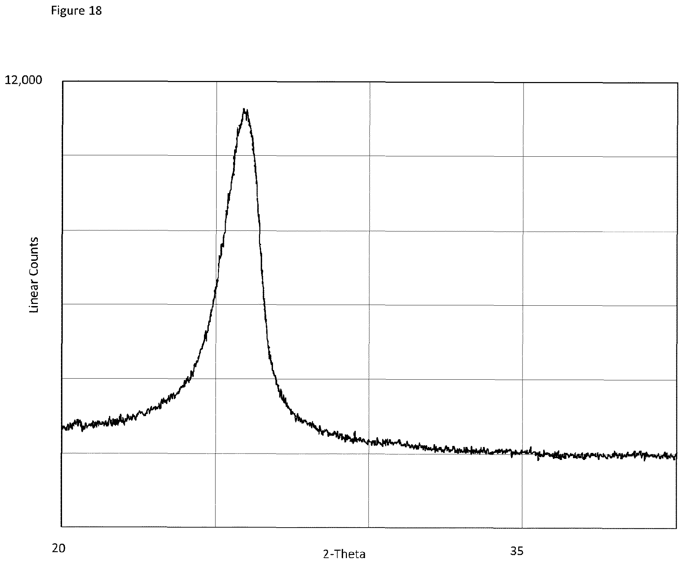

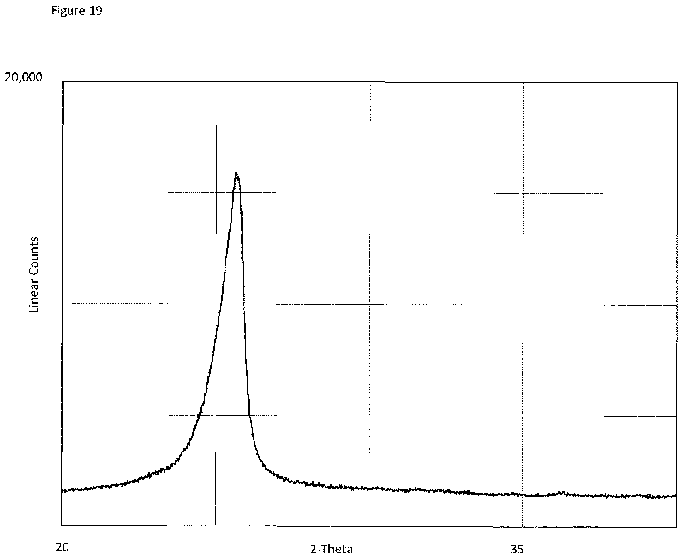

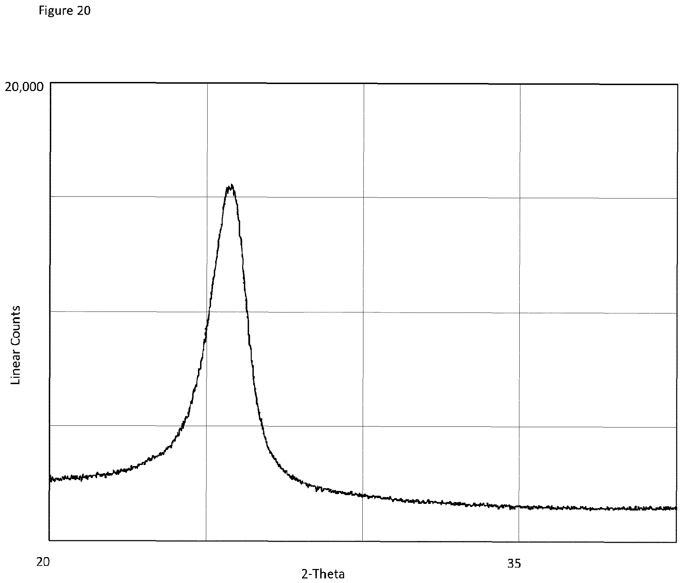

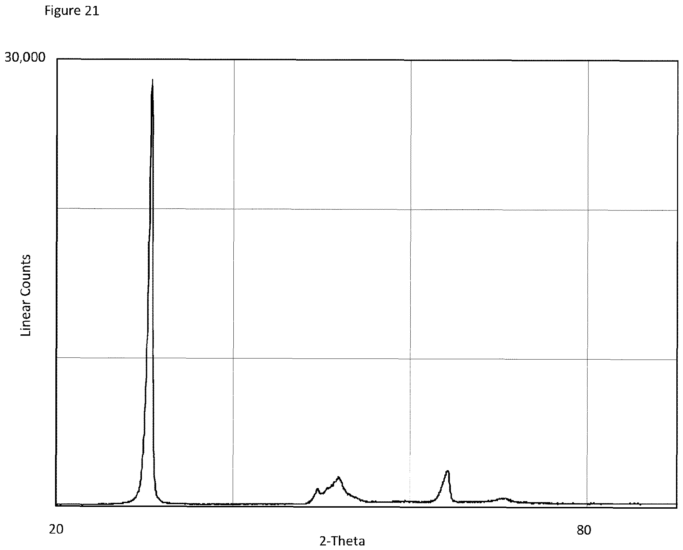

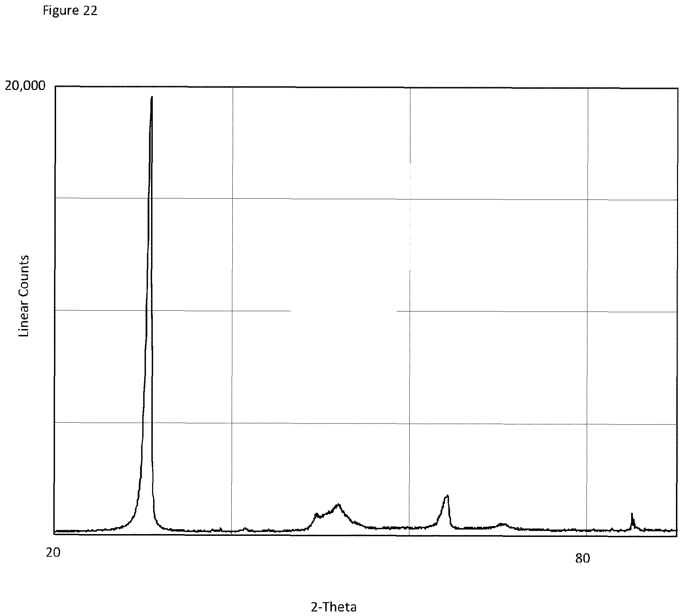

Figures 16-22 show XRD spectra of samples of graphite produced with novel catalysts and lower lignin content feedstock at 1200C.

### DETAILED DESCRIPTION OF THE INVENTION

The following is a description of the present invention, including preferred embodiments thereof, given in general terms. The invention is further elucidated from the disclosure given under the heading "Examples" herein below, which provides experimental data supporting the invention, specific examples of various aspects of the invention, and means of performing the invention.

### Definitions

Throughout this specification and any claims which follow, unless the context requires otherwise, the words "comprise", "comprising" and the like, are to be construed in an inclusive sense as opposed to an exclusive sense, that is to say, in the sense of "including, but not limited to".

For the purposes of this specification, a "hydrothermal reactor" indicates a substantially pressure sealable container appropriate to carry out hydrothermal carbonisation. Those of skill in the art will appreciate the materials used, the specific configuration of such reactors, and how such reactors interface with other components of a system. Further details on the conditions that the reactor must be able to withstand are provided below.

For the purposes of this specification, a "graphitisation reactor" indicates a container appropriate to contain a reaction converting substantially amorphous carbonaceous material into graphite. Those of skill in the art will appreciate the materials used, the specific configuration of such reactors, and how such reactors interface with other components. Further details on the conditions that the reactor must be able to withstand are provided below.

"Biomass" as referred to herein comprises any material originally of biological origin capable of being converted to char to tar. In particular embodiments, the biomass is selected from the group consisting of plant material, wood, grass, agricultural wastes, cereal plants, seaweed, organic waste, pine, hickory, coconut shell, rape seed, corn stover, coffee grains, vine clippings, cedar, bamboo, sandalwood, cotton, phenolic resins, eucalyptus, industrial hemp, *Arundo donax, Mithcanthus gigantus,* pine species, mushrooms and willow. Vehicle tyres are also specifically included within the scope of the term "biomass". In a particular embodiment, the biomass may be chipped wood ranging in size. For example the wood may be sawdust (approximately 1-3mm² to approximately 1-2 mm thick) through to wood chips (approximately 30-40mm² to approximately 8mm thick).

"Hydrothermal carbonisation" or "HTC" as referred to herein is the process by which a carbonaceous feedstock is converted to a char (hydrochar) in the presence of a solvent (usually water/aqueous solution), the process occurring under pressure and at a temperature at the lower region of the hydrothermal liquefaction process such as between approximately 180°C and approximately 400°C.

"Char" as referred to herein is the porous, solid, amorphous material that remains after light gases (e.g. coal gas) and tar have been substantially driven out or released from a carbonaceous material during pyrolysis. It is porous and has a fixed carbon content greater than the original starting biomass.

"Tar" as referred to herein is the highly viscous liquid fraction containing a mix of hydrocarbons, resins and alcohols that remains after light gases (e.g. coal gas) have been substantially driven out or released from a carbonaceous material (such as biomass) during pyrolysis.

"Hydrochar" as referred to herein is char formed by hydrothermal carbonisation.

"Internal surface area" as referred to herein is the internal surface area of a porous material as measured by the BET (Brunauer, Emmett and Teller) nitrogen absorption method in square metres per gram (m²/g). The BET technique is the most common method for determining the surface area of powders and porous materials although other methods will be known to those of skill in the art. Nitrogen gas is generally employed as the probe molecule and is exposed to a solid under investigation at liquid nitrogen conditions (i.e. 77 K). The surface area of the solid is evaluated from the measured monolayer capacity and knowledge of the cross-sectional area of the molecule being used as a probe. For the case of nitrogen, the cross-sectional area is taken as 16.2 Å²/ molecule.

"Ash" as referred to herein is the non-aqueous remains of a material subjected to any complete oxidation process. It typically consists mostly of metal oxides and other inorganic mineral salts.

"Graphite" is an allotropic form of the element carbon consisting of layers of hexagonally arranged carbon atoms in a planar condensed ring system graphene layers. The chemical bonds within the layers are covalent with sp2 hybridization and with a C-C distance of 141.7 pm. The weak bonds between the layers are metallic with a strength comparable to van der Waals bonding only.
(IUPAC. Compendium of Chemical Terminology, 2nd ed. (the "Gold Book"). McNaught and Wilkinson. Oxford (1997). XML on-line corrected version: http://goldbook.iupac.org (2006-)).

"Electromagnetic radiation" or "EMR" refers to radiation in the radio frequency band to the microwave frequency band that is able to heat matter, i.e. 10kHz to 50 GHz. Preferably, a range of 13.56 MHz to 5.8GHz is used for practical heating applications.

"Electromagnetic radiation generator" as referred to herein is any apparatus capable of producing electromagnetic radiation. Suitable electromagnetic radiation generators will be known to those of skill in the art. However, by way of example, apparatus includes triode, klystron and magnetron tubes as well as solid state diodes and solid state transistors. Optionally, the electromagnetic radiation generator generates electromagnetic radiation at a specific frequency range. The electromagnetic radiation generator may have a frequency range of about 900 MHz to about 3 GHz. Typical frequencies of the electromagnetic radiation used are between about 900 MHz and about 1000 MHz, and between about 2 GHz and about 3 GHz. Other frequencies that may also be suitable include about 13 MHz, about 27 MHz and about 40 MHz, for example.

"Hybrid heating" as referred to herein means heating carried out by electromagnetic radiation (as described above) and conventional heating at the same time or substantially the same time. Conventional heating may be achieved by radiative, ultrasonic, convective, conductive or resistive heating.

"Microwave radiation" as referred to herein is electromagnetic radiation in the form of microwaves produced by an electromagnetic radiation generator. Preferably the microwave radiation has a frequency range of super high frequency (SHF) or extremely high frequency (EHF) that are typical of microwaves. In a preferred embodiment, the frequency of the microwave radiation may be one of the industrial, scientific and medical (ISM) bands for industrial heating. The ISM bands for industrial heating include about 915 MHz, about 922 MHz, and about 2450 MHz. Other frequencies that may also be suitable include about 13 MHz, about 27 MHz and about 40 MHz, for example.

A "catalyst" as referred to herein may comprise one or more compounds and the term will be understood to also include a catalyst formed of multiple compounds which each have a catalytic effect on a reaction.

"Aqueous solution" means any liquid containing water. For example the solution may be pure water or may contain impurities or other active components such as acids, solvents and ionic liquids.

Despite the previous lack of knowledge regarding the production of high value carbon allotropes from biomass, the inventors have now demonstrated that graphite can be sustainably produced and recovered from porous char materials, for example those produced from waste biomass. The inventors have also demonstrated the production of graphite directly from raw biomass (rather than via hydrothermal carbonisation to produce char). The inventors have developed a method for the production of graphite from char or biomass that provides an efficient and economically viable alternative to previous methods for the synthetic production of graphite. The method involves the impregnation of a reaction catalyst into a porous char to result in a homogenous dispersal of the catalyst throughout the char or biomass. Where hydrothermal carbonisation is used, graphitisation yields a graphite product at high yield and with much reduced graphitisation times compared to a catalyst being directly impregnated into raw biomass. When biomass is used to produce the char, this provides a sustainable alternative to using fossil fuels for such methods.

Further, the invention provides an alternative method for the use of biomass waste products thus providing the user with a source of revenue from those waste products, and also capturing the carbon in those waste products. The use of hydrothermal carbonisation also enables other useful products from the biomass to be collected. These include biogases and volatile organic compounds, liquid bio-oils and lignin.

Accordingly, in a first aspect, the invention provides a method of producing graphite comprising heating at least one of char, tar and biomass in the presence of a catalyst to a temperature sufficient to produce graphite, wherein the catalyst catalyses the conversion of the at least one of char, tar and biomass to graphite.

Char is a porous material resulting from the pyrolysis (i.e. the anaerobic thermochemical decomposition) of a carbonaceous material. The pores are formed by the volatilisation or liquefaction of materials present in the carbonaceous feedstock. The inventors have found that the porous nature enables a homogenous dispersal of a catalyst suitable for the production of graphite. In one form, the char may be hydrochar produced via a hydrothermal carbonisation process.

In a particular embodiment, the char has an internal surface area between 200m²/g and 2500m²/g. In alternative embodiments, the internal surface area is selected from the group consisting of greater than 200m²/g, greater than 300m²/g, greater than 400m²/g, greater than 500m²/g, greater than 600m²/g, greater than 700m²/g, greater than 800m²/g, greater than 900m²/g, greater than 1000m²/g, greater than 1500m²/g, greater than 2000m²/g, less than 2500m²/g, less than 1000m²/g, less than 900m²/g, less than 800m²/g, less than 700m²/g, less than 600m²/g, less than 500m²/g, less than 400m²/g, less than 300m²/g, between 200m²/g and 2500m²/g, between 200m²/g and 1500m²/g, between 200m²/g and 1000m²/g, between 200m²/g and 800m²/g, between 200m²/g and 600m²/g, between 200m²/g and 400m²/g, between 400m²/g and 1000m²/g, between 400m²/g and 800m²/g, or between 400m²/g and 600m²/g.

In a particular embodiment, the catalyst is introduced by treating the char, tar or biomass with an aqueous solution containing the catalyst. Preferably, the treatment comprises soaking the char, tar or biomass in the solution for a period sufficient for the catalyst to impregnate the char, tar or biomass substantially throughout. The greater the impregnation of the catalyst solution, the more homogenous the graphite produced. It will be appreciated by those of skill in the art that the soaking period depends on the porosity and particle size of the char or biomass. Preferably, the soaking period is selected from the group consisting of approximately 10 minutes, approximately 30 minutes, approximately 1 hour, approximately 2 hours, approximately 4 hours, approximately 6 hours, approximately 12 hours, approximately 24 hours, approximately 48 hours, approximately 48 hours, between 10 minutes and 72 hours or between 12 and 24 hours. In a particular embodiment, the catalyst is introduced to tar remaining after hydrothermal treatment of biomass by blending tar with a solution containing the catalyst. Preferably the introduction or impregnation is carried out at or above the melting point of the tar.

In a particular embodiment, the catalyst is introduced to or impregnated into the biomass or char by soaking the biomass or char in a solution containing the catalyst. Preferably the introduction or impregnation is carried out under vacuum of between -0.5 Bar to -0.99 Bar.

The inventors tested a large number of catalysts for their efficacy in catalysing the production of graphite in a graphitisation reactor. In a particular embodiment, the catalyst comprises a transition metal catalyst which catalyses the conversion of char to graphite, and wherein when the catalyst is in ionic form reacts with hydrochloric acid to form a chloride salt. The inventors found that such catalysts are particularly effective for the conversion of charm tar or biomass to graphite using the methods described herein because the chloride ion can be washed from the graphite yielding a product with minimal levels of impurities such as catalysts. Those of skill in the art will appreciate the known catalysts that catalyse the conversion of char to graphite and would be able to test those catalysts for reactivity with hydrochloric acid using known methods. In a particular embodiment, the catalyst in ionic form has a valence of less than three. A valence of less than three is preferable because this asissts with maximising the ionic character of the catalyst, thus allowing hydrolysis to remove any ions trapped in the graphite produced. In a particular embodiment, the catalyst is selected from the group consisting of a transition metal catalyst, iron (III) nitrate, nickel nitrate, chromium nitrate, chromium chloride, manganous acetate (Mn(CH₃COO)₂), cobaltous nitrate (Co(NO₃)₂), nickel chloride (NiCl₂) or combinations thereof. The inventors have also developed novel catalysts which have been shown to be effective in the conversion of a carbon-containing compound (e.g. char, tar or biomass) to graphite via a graphitisation process described herein. These novel catalysts include at least manganous acetate (Mn(CH₃COO)₂) and nickel chloride (NiCl₂).

The inventors have found that the concentration of the catalyst has an effect on the degree of graphitisation during the methods described herein. In particular, the inventors have found that a concentration of at least 1M provided a good graphite yield and degree of crystallinity. In a further embodiment, the inventors have increased the concentration of the catalyst to 2.8M which resulted in improved graphite yield and degree of crystallinity. In a particular embodiment, the catalyst is provided at a concentration of at least 0.1M, at least 1.0M, at least 1.5M, at least 2.0M, at least 2.5M, or at least 2.8M. In a particular embodiment, a 0.1M aqueous solution of iron (III) nitrate is used as the catalyst. A skilled person will appreciate other catalysts and concentrations appropriate to achieve impregnation and efficient reaction.

In a particular embodiment, the catalyst is removed from the hydrochar prior to graphitisation. The inventors surprisingly found that graphitisation to produce high quality graphite also occurs when the catalyst is removed following hydrothermal carbonisation but prior to graphitisation. Without wishing to be bound by theory, the inventors believe that this occurs because the carbon structure is modified suitably under hydrothermal conditions to allow latent crystal structures to further order themselves into graphite at the higher graphitisation treatment temperatures. The advantage with this method is that the catalyst is fully recovered and not lost/volatilised during high temperature treatment.

The graphitisation reactor may be any reactor appropriate to receive carbon-containing or partially carbonised material (e.g. char, tar or biomass) and undergo heating to a temperature where graphitisation occurs. In a particular embodiment, the graphitisation reactor comprises an electric furnace (pottery kiln)(Cobcraft New Zealand) rated to 3kW, 1300°C, 1atm. In one embodiment, the graphitisation reactor comprises a TE010 microwave cavity coupled to an electromagnetic generator, for example a 922MHz electromagnetic generator.

It is also envisaged that the graphitisation reactor could be pressurised to up to 30 bar, or to a substantial vacuum if the need arises.

In a particular embodiment, the graphitisation reactor comprises an outer container and one or more refractive liners contained within the outer container. Preferably, the one or more refractive liners comprises alumina, graphite or silica nitride. In a particular embodiment, the one or more refractive liners partially or completely surround the receptacle. In a particular embodiment, the outer container comprises at least one aperture adapted for insertion or removal of feedstock.

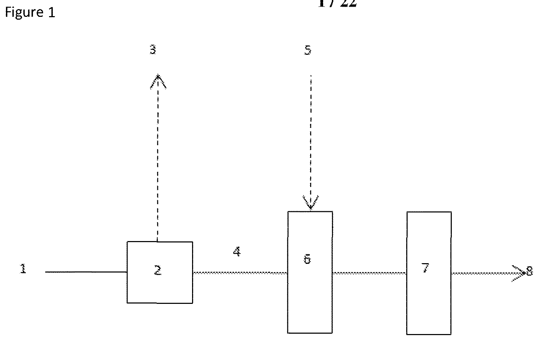

Figure 1 provides a schematic showing an embodiment of the method described herein. Biomass 1 is introduced to an HTC reactor 2 and undergoes HTC. Volatiles and liquefied matter are released from the biomass 3 to yield a partially carbonised hydrochar 4. The hydrochar is impregnated with a catalyst 5 in a suitable vessel 6. The impregnated hydrochar is then graphitised in a high temperature graphitisation reactor 7 to produce graphite 8.

The graphitisation reactor provides the necessary temperature rise and thus molecular motion required to promote the re-arrangement of amorphous carbon to ordered crystalline graphite. The temperature rise results in an increase in the electrical conductivity of the material and oxygen removal from the material. This in turn increases the purity of the synthetic graphite produced.

In a particular embodiment, the char is heated to a temperature where graphitisation occurs. Preferably, the temperature is between 700°C and 3200°C.Preferably, the temperature is between 1000°C and 2500°C. In alternative embodiments, the temperature sufficient to produce graphite is selected from the group consisting of greater than 600°C, greater than 800°C, greater than 1000°C, greater than 1100°C, greater than 1200°C, greater than 1300°C, greater than 1400°C, greater than 1500°C, greater than 1600°C, greater than 1700°C, greater than 1800°C, greater than 1900°C, greater than 2000°C, greater than 2100°C, greater than 2200°C, greater than 2300°C, greater than 2400°C, greater than 2600°C, greater than 2800°C, greater than 3000°C, less than 3200°C, less than 3000°C, less than 2500°C, less than 1100°C, less than 1200°C, less than 1300°C, less than 1400°C, less than 1500°C, less than 1600°C, less than 1700°C, less than 1800°C, less than 1900°C, less than 2000°C, less than 2100°C, less than 2200°C, less than 2300°C, less than 2400°C, approximately 1000°C, approximately 1100°C, approximately than 1200°C, approximately 1300°C, approximately 1400°C, approximately 1500°C, approximately 1600°C, approximately 1700°C, approximately 1800°C, approximately 1900°C, approximately 2000°C, approximately 2100°C, approximately 2200°C, approximately 2300°C, approximately 2400°C, approximately 2500°C, approximately 2600°C, approximately 2800°C, approximately 3000°C, approximately 3200°C, between 600°C and 3200°C, between 1000°C and 2500°C, between 1000°C and 2000°C, between 1000°C and 1500°C, between 1200°C and 2500°C, between 1200°C and 2000°C, between 1200°C and 1500°C, between 1200°C and 1400°C, between 1300°C and 1500°C, and between 1300°C and 2500°C.

The graphitisation reactor may be heated by any heating means. However, in a particular embodiment, the graphitisation heating means comprises a resistive electric heating element. In an alternative embodiment, the graphitisation reactor is heated by, or is capable of being heated by, electromagnetic radiation as the graphitisation heating means. In some embodiments, the graphitisation reactor is heated by a hybrid heating means - i.e. an EMR generator and a conventional heating means in tandem.

In a particular embodiment, the graphitisation heating means comprises an electromagnetic radiation generator adapted to, in use, apply electromagnetic radiation to the char. The inventors have found that using electromagnetic radiation, in particular microwave radiation, to heat the char results in an extremely quick and thorough reaction to produce high quality graphite. This increased efficiency lowers overall energy costs of the process and produces a very high quality graphite product in a short time period. Without wishing to be bound by theory, it is believed that the enhanced conversion of char to graphite using electromagnetic radiation heating is due to the direct interaction of the EMR field with the char, tar or biomass material and the impregnated catalyst. Provided the catalyst is homogenously dispersed within the char, the EMR is able to couple with the char and provide a uniform reaction and thus product throughout. Accordingly, in one embodiment, the EMR couples with the char, tar or biomass to heat the char, tar or biomass.

In a particular embodiment, the HTC heating means comprises an electromagnetic radiation generator. Preferably, the electromagnetic radiation generator comprises a magnetron oscillator. In a particular embodiment, the magnetron oscillator comprises a 30kW 915-922 MHz magnetron (National Panasonic).

Preferably the electromagnetic radiation generator is associated with the graphitisation reactor by way of a waveguide which facilitates the transmission of the electromagnetic radiation to the graphitisation reactor. The waveguide preferably terminates at the outer container of the graphitisation reactor where a microwave transparent window facilitates transmission of the electromagnetic radiation into the reactor while preventing egress of material from the reactor.

The waveguide structure is determined by the power output of the electromagnetic radiation power source. The waveguide is typically formed from a material that is highly electrically conductive at the frequency of operation. In a particular embodiment, the waveguide is constructed from aluminium, brass, copper or gold. The dimensions of the waveguide are determined so as to not attenuate propagation of the radiation. Typically a rectangular waveguide is preferred.

In one embodiment, the waveguide comprises a hollow component. The waveguide may comprise a hollow metallic component. In an alternative embodiment, the waveguide may comprise a solid component.

In a particular embodiment, the waveguide further comprises an impedance matching tuner to modulate the impedance of the electromagnetic radiation transmitted from the electromagnetic radiation generator. Appropriate waveguide impedance tuners will be known to those of skill in the art. In a particular embodiment, the waveguide impedance tuner comprises a 30kW four-stub impedance tuner. The tuner is used to match the characteristic impedance of the reactor containing the biomass/char (load) to the electromagnetic generator (source). By matching the source and load impedances, optimum energy coupling into the load may be realised. The tuner may be manually adjusted or automatically as part of a control system.

The microwave transparent window is a panel which allows electromagnetic radiation to pass through it substantially unaffected, while at the same time retaining a mechanical seal with the container in which it is found to prevent egress of material from the reactor. The microwave transparent window may be made from any suitable material and such materials will be known to those of skill in the art. However by of example, the window may be made from quartz, and may have hi temperature o-rings to connect the window with the outer container.

In a particular embodiment, the electromagnetic radiation is sufficient to heat the char, tar or biomass to a temperature at which graphitisation occurs. The power of the EMR applied to the sample depends on the sample size, mass and specific heat capacity and those of skill in the art will be able to determine the appropriate power to apply. In a particular embodiment, the power is from 10w to 10kW. The frequency of the EMR applied will depend on the properties of the char being heated and the geometry of the reactor. In a particular embodiment, the frequency of the EMR applied to the sample is from 896MHz to 922MHz or from 915MHz to 922MHz.

In a particular embodiment, the graphitisation reactor comprises an outer container and an electromagnetic cavity defining an inner portion of the reactor. Preferably, the electromagnetic cavity is proportioned to act as a circular waveguide which sets up a TE₀₁₀ electromagnetic radiation propagation mode. It will be appreciated by those of skill in the art that the proportions will change depending on the size of the reactor and the frequency of the electromagnetic radiation.

In particular embodiments, the graphitisation reactor may comprise one or more components selected from a gaseous inlet for the introduction of an inert atmosphere, a pressure sensing port, a pressure regulator, a temperature sensor or sensing port and an outlet for egress of gas.

In a particular embodiment the graphitisation reactor further comprises an appropriate receptacle contained therein for the char, tar or biomass. The receptacle is suitable to receive the material and contain it during the graphitisation process. Suitable materials for such a receptacle will be known to those of skill in the art, however, by way of example the receptacle may be constructed from a heat-resistant material selected from the group consisting of quartz, silica nitride (Si₃N₄), alumina, graphite and O-SiAlON. In a particular embodiment, the receptacle comprises an inlet capable of receiving an inert atmosphere to purge oxygen from the receptacle. Where electromagnetic radiation heating is used for the graphitisation process, the receptacle is constructed from material that is substantially transparent to electromagnetic radiation.

In a particular embodiment, the char, tar or biomass is heated in an inert atmosphere in the graphitisation reactor. The composition of the inert atmosphere in the graphitisation reactor can have a significant impact on the efficiency of the reaction. For example, oxygen will reduce the efficiency of the graphitisation process by ablation of the graphite and formation of CO/CO₂. "Inert atmosphere" as referred to herein is intended to be interpreted as an atmosphere that contains gases that are substantially non-reactive with reactants or apparatus used in hydrothermal carbonisation or graphitisation. Examples of such inert gases include, but are not restricted to, nitrogen gas, noble gases, helium, argon and neon, as well as minimally reactive gases including carbon dioxide, carbon monoxide and ozone. It is important that the reaction atmosphere is inert to prevent oxidation of the carbon and production of CO or CO₂. Preferably, the inert gas is passed through the reactor. Preferably, the flow rate of the inert gas is sufficient to achieve and maintain an inert atmosphere throughout the heating process. Preferably, the flow rate is approximately 12L per minute. In an alternative embodiment, a partial or substantially complete vacuum is envisaged and is intended to be included within the scope of the term "inert atmosphere".

The invention provides graphite produced by a graphitisation method described herein, optionally further comprising a step of hydrochar formation by hydrothermal carbonisation.

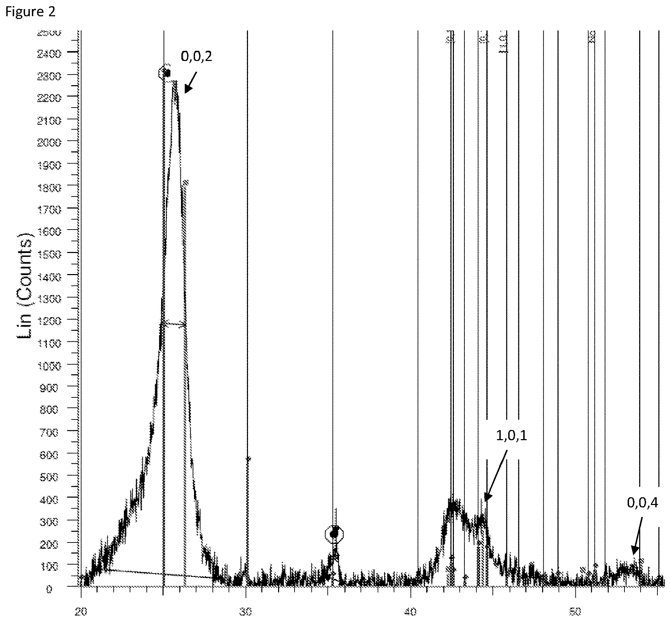

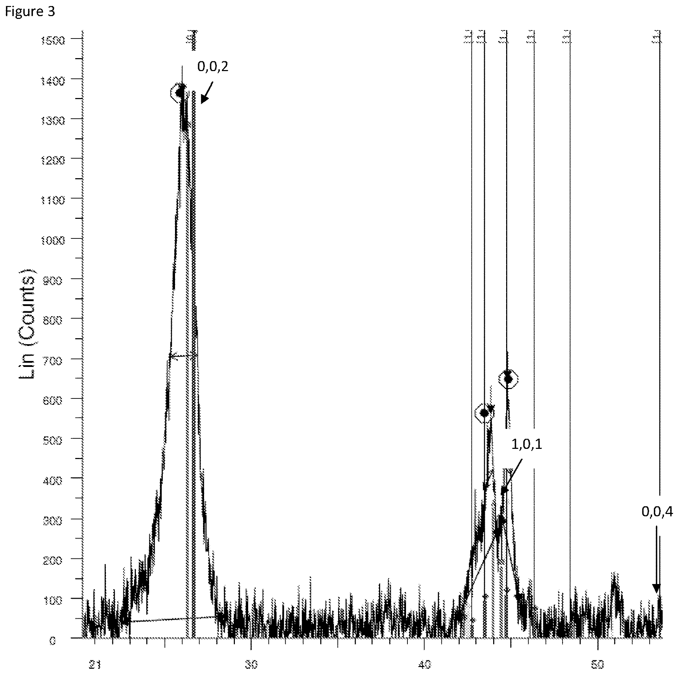

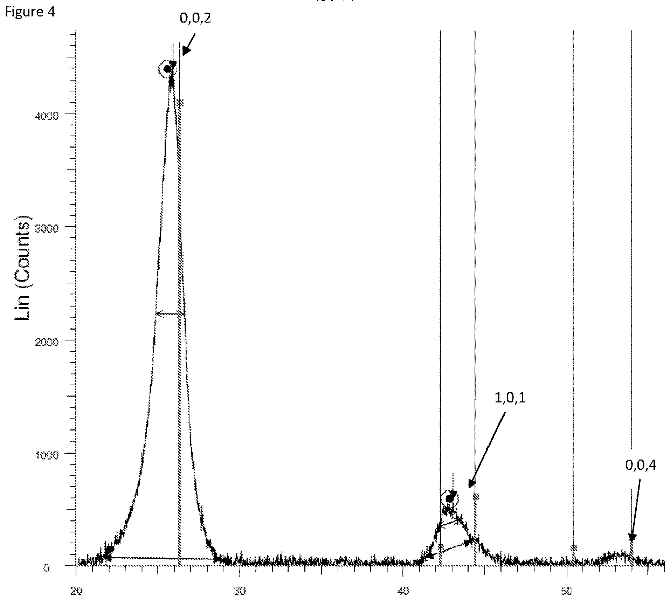

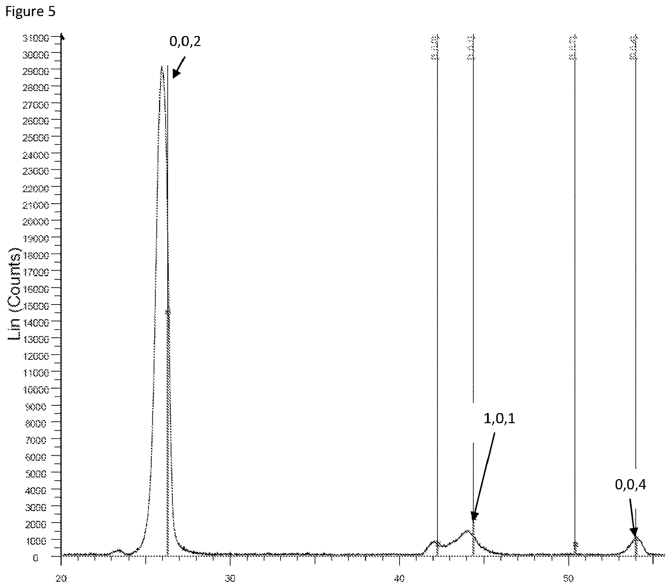

Graphite produced by the graphitisation process is cooled and typically removed from the reactor in the receptacle. Those of skill in the art will appreciate the tests and ways to determine the structure and composition of the product. In a particular embodiment, the graphite produced comprises a hexagonal crystal structure. In a particular embodiment, the graphite produced comprises x-ray diffraction miller indices of 0,0,2, 1,0,1 and 0,0,4 as measured using x-ray diffraction spectroscopy. In a pure graphite reference sample, the 0,0,2 miller index is very prominent compared to the 1,0,1 and the 0,0,4 peaks. Figure 5 shows a reference sample analysed using x-ray diffraction spectroscopy. The peaks can be clearly seen. Figure 2 shows the XRD spectrum of a sample of graphite produced according to the method of the invention. Again, the peaks can clearly be seen. Figure 3 shows an XRD spectrum of a sample prior to catalyst removal. Figure 4 shows the same sample following catalyst removal. All samples demonstrate the presence of graphite.

The quality/purity of graphite is often defined by the inter-layer spacing (d-spacing), the reflection intensity of the crystals, the crystal size and the electrical conductivity. These measures are referred to in the results to demonstrate the high degree of purity of the graphite produced. In a particular embodiment, the graphite produced comprises an inter-layer spacing (d-spacing) of between 0.333nm and 0.337nm, less than 0.34nm, less than 0.337nm or approximately 0.335nm. In a particular embodiment, the graphite produced comprises a crystal size of at least 0.246nm. In a particular embodiment, the graphite produced comprises a proportion of crystallinity of between 67% to 99.9%, or between 75% to 99.9%. In a preferred embodiment the proportion of crystallinity is greater than 87%. In a particular embodiment, the graphite produced comprises electrical resistivity of less than 50milliohmmetres (Ω.m).

In a particular embodiment, the graphite produced comprises an ash content selected from the group consisting of less than 10%, less than 5%, less than 1%, less than 0.9%, less than 0.8%, less than 0.7%, less than 0.6%, less than 0.5%, less than 0.4%, less than 0.3%, less than 0.2%, less than 0.1%.

Following removal from the reactor, the graphite is preferably purified by removal of the catalyst. For commercial applications the concentration of the remaining catalyst is an important consideration. In general, the lower the concentration of remaining catalyst, the better. In a particular embodiment, the graphite is substantially free of catalyst following the step of removal of the catalyst. Substantially free of catalyst means that XRD analysis according to the methods described in the examples show no residual trace of the catalyst used. In some embodiments, the concentration of the catalyst is reduced to between 0.5% w/w to 1% w/w catalyst to graphite. Typically the catalyst will be included in the calculation of overall ash content therefore the references herein to ash content preferences are to be interpreted as references to catalyst concentration also. In particular embodiments, the catalyst concentration is between 0.03% and 0.1%, less than 0.3% w/w, less than 0.1% less than 0.01% or less than 0.001% w/w.

By way of example, the catalyst may be removed by treatment of the graphite in acid for a period. The period of acid treatment is sufficient to form a compound capable of removal by a solvent. Preferably, the acid comprises hydrochloric acid which forms a chloride with the metal catalyst and allows removal by washing with a solvent such as water or aqueous solution. Preferably the hydrochloric acid is at a concentration of between 0.1M to 12M in aqueous solution. If the catalyst is not completely removed, this contamination can be detected during graphite validation, for example during X-ray diffraction spectroscopy. The methods described herein are particularly useful for production of commercial grade graphite because they enable substantially complete removal of the catalysts thus yielding high grade commercial quality graphite. Preferably, the period of acid treatment is between 10 minutes and 24 hours. In an alternative embodiment, the period is selected from the group consisting of greater than 5 minutes, greater than 10 minutes, greater than 15 minutes, greater than 30 minutes, greater than 1 hour, greater than 2 hours, greater than 6 hours, greater than 12 hours, less than 24 hours, less than 12 hours, less than 6 hours, less than 2 hours, less than 1 hour, less than 30 minutes, less than 15 minutes, between 5 minutes and 24 hours, between 5 minutes and 12 hours, hour, between 5 minutes and 2 hours, between 5 minutes and 6 hours, between 5 minutes and 12 hours, between 10 minutes and 15 minutes, between 10 minutes and 30 minutes, between 10 minutes and 1 hour, and between 10 minutes and 2 hours. In a particular embodiment, the treatment of the graphite in acid comprises vacuum soaking of graphite in acid.

Following catalyst removal treatment, the graphite is washed with a suitable solvent and dried for a period sufficient to drive out any residual solvent. Preferably, the graphite is dried to a moisture content of less than 5%. In a particular embodiment, the moisture content is selected from the group consisting of less than 4%, less than 3%, between 1% and 5%, between 2% and 4%, and between 1% and 3%.

The inventors have found that using hydrothermal carbonisation (HTC) to produce porous char or tar for use in the graphitisation reaction results in a surprisingly efficient method of production of graphite. Accordingly, in a particular embodiment, the char is hydrochar.

Using hydrothermal carbonisation, raw biomass can be treated to produce a char with a particularly high internal surface area called hydrochar. Impregnation of catalyst into this hydrochar is greatly improved when compared to impregnation into raw biomass which enables excellent dispersal of the catalyst. This in turn leads to a high quality product and ensures that a very high proportion of the char has reacted to form a homogenous graphite product. The pores of the raw biomass are opened by this hydrothermal carbonisation pre-treatment, which allows for a greater and more homogenous uptake of catalyst and thus a more uniform conversion to graphite.

Accordingly, in a particular embodiment, the hydrochar or tar is produced by:
a. introducing biomass and aqueous solution to a hydrothermal reactor;
b. heating the biomass and aqueous solution under pressure to a temperature and pressure sufficient to produce at least one of hydrochar and tar.

A particular problem encountered by the inventors was the impregnation of the catalyst into the sample of char (or hydrochar) undergoing graphitisation. The inventors found that a greater proportion of, and increased quality of graphite is produced if the catalyst is dispersed throughout the char samples. To achieve substantially complete impregnation into the char, the inventors found that it was preferable to introduce the catalyst to the char during the char's formation. The inventors therefore introduced the catalyst to the biomass prior to or during the formation of produced hydrochar via hydrothermal carbonisation (HTC). Further details on this are provided below.

The use of hydrothermal carbonisation to produce hydrochar provides a number of advantages over the graphitisation of raw biomass. For example, if raw biomass is subjected to catalyst impregnation prior to graphitisation, the biomass has a comparably low internal surface area therefore catalyst impregnation is reduced or impregnation times are greatly increased. Hydrothermal carbonisation pre-treatment increases porosity and "washes" out minerals and components that would undergo liquefaction or vaporisation. The tar can also be used and converted to graphite. The ash content of raw pine biomass is approximately 2% and following HTC treatment, this is reduced to approximately 0.2%. Normal pyrolysis to charcoal reduces the ash content to approximately 1% therefore HTC provides a clear advantage in reduction of mineral impurities in the feedstock and the final graphite product. Synthetic graphite is increasingly used in electrical applications and an increased mineral content is undesirable because it also increases the electrical resistance thus lowering the graphite value.

The removal of minerals is an added advantage of using the HTC process to produce hydrochar as it results in a hydrochar and graphite with a much lower mineral or ash content. In a particular embodiment, the hydrochar comprises ash content selected from the group consisting of less than 10%, less than 5%, less than 1%, less than 0.9%, less than 0.8%, less than 0.7%, less than 0.6%, less than 0.5%, less than 0.4%, less than 0.3%, less than 0.2%, less than 0.1%.

In a particular embodiment, the char, tar or biomass has been delignified prior to graphitisation. In this embodiment, the precursor to the char will typically have been delignified, i.e. the biomass itself will have been delignified. This embodiment is not intended to apply solely to a delignification process applied to the char or tar, precursors to said char or tar are also intended to be encompassed. Preferably, delignification is carried out prior to introduction of the catalyst. Without wishing to be bound by theory, it is believed that delignification allows better penetration by the catalyst and lowers the activation energy required for crystalline growth due to reduced cross-linking. Delignification may be carried out according to methods known to those of skill in the art. In particular embodiments, lignin is removed by treatment of the raw biomass with a solvent such as an alcohol, e.g. ethanol or methanol. Other methods of delignification will be known to those of skill in the art. In a particular embodiment, the delignified char, tar or biomass comprises a lignin content of less than 15%, less than 10%, less than 9%, less than 5%, less than 2% or less than 1%. In a particular embodiment, the catalyst used to catalyse the conversion of biomass or char to graphite comprises manganous acetate.

In an alternative embodiment, the biomass comprises biomass with naturally low lignin content such as herbaceous feedstocks, industrial hemp, or protein-containing carbon feedstock such as fish, meat, or fungi. In this embodiment, the method of production of graphite provides graphite of increased quality due to the ability for the catalyst to penetrate deeper into the biomass particles and thus facilitate the conversion to graphite. Further, the energy required to precipitate the graphite crystals is lowered due to the absence of the lignin polymer.

In a particular aspect, the invention provides a method for the conversion of biomass to graphite, the method comprising:
a. delignifying the biomass;
b. heating the biomass in the presence of a catalyst to a temperature sufficient to produce graphite;
wherein the catalyst catalyses the conversion of the at least one of char, tar and biomass to graphite. Embodiments relating to the different catalysts used, the methods of impregnation and removal of the catalyst, hydrothermal carbonisation of the biomass prior to graphitisation and methods of graphitisation also apply to this aspect of the invention.

The volatiles and tar or bio-oils produced during hydrothermal carbonisation may be collected and used. In addition, the high pressure leads to a more rapid coalification effect promoted under HTC conditions that is not present during dry pyrolysis.

In summary, biomass HTC treatment is carried out to:
a. normalise the basic composition and structure of the biomass;
b. reduce the amount of volatile-matter that is released into the graphitisation reactor during heating;
c. deoxygenate the biomass;
d. partially carbonise the biomass and increase electrical conductivity thus increasing electromagnetic radiation susceptibility;
e. avoid the need to first dry the biomass prior to graphitisation as is usually required when using raw biomass;
f. capture volatile organic compounds into the aqueous reaction medium, which can be further processed/treated by fractional distillation or anaerobic digestion to separate wanted compounds from unwanted compounds.

Accordingly, in a particular embodiment, the invention provides a method of producing graphite comprising:
a. introducing biomass and aqueous solution to a hydrothermal reactor;
b. heating the biomass and aqueous solution under pressure to a temperature and pressure sufficient to produce hydrochar;
c. introducing a catalyst to the hydrochar;
d. heating the hydrochar and catalyst to a temperature sufficient to produce graphite.

In a particular embodiment, the biomass and aqueous solution are introduced to the hydrothermal reactor together, simultaneously or sequentially in any order. For example the biomass and the aqueous solution may be pre-mixed and introduced to the reactor together. Alternatively, the biomass or the aqueous solution may be introduced to the reactor at the same time (simultaneously). Alternatively, the biomass or the aqueous solution may be introduced to the reactor before the other.

In a particular embodiment, the biomass and aqueous solution is heated by electromagnetic radiation.

In a particular embodiment, the hydrochar is heated by electromagnetic radiation.

Under hydrothermal conditions water in the aqueous solution acts as a powerful organic solvent, which enables organic compounds to solubilize, and achieve their reactions in a homogeneous medium.

Although aqueous solution is typically used for hydrothermal processes, it will be appreciated by those of skill in the art that any suitable solvent may be used.

The catalyst may be introduced to the hydrothermal reactor before or during the hydrothermal carbonisation process to incorporate the impregnation into the hydrothermal reaction. Accordingly, in a particular embodiment, the catalyst is introduced to the hydrochar during hydrothermal carbonisation.

The hydrothermal carbonisation process consists of heating and pressure treatment in a suitable reactor. In a particular embodiment, the hydrothermal reactor comprises a pressure-sealable reaction container and a heating means. The reaction container may be formed from any material suitable to maintain temperatures and pressures at which HTC occurs, for example of up to 500°C and pressures of up to 40000kPa. In a particular embodiment, the HTC reactor comprises at least one aperture for the introduction of removal of biomass. The hydrothermal reactor may further comprise one or more gas conduits for transfer of gases to or from the reactor.

A small amount of acid catalyst may be added to the biomass and reagent prior to hydrothermal treatment in order to enhance biomass degradation and lower residence times. This also promotes the removal of oxygen from the biomass and formation of fixed carbon. Oxygen extracted from the biomass in this way will promote the formation of water molecules. If an acid catalyst is not used, oxygen in the biomass will more likely form carbon monoxide gas, thus reducing the amount of fixed carbon retained in the end product.

In a particular embodiment, the hydrothermal reactor is heated to a temperature of between 180°C and 400°C. In a particular embodiment, the temperature is selected from the group consisting of greater than 180°C, greater than 200°C, greater than 250°C, greater than 300°C, greater than 350°C, greater than 350°C, less than 400°C, less than 350°C, less than 300°C, less than 250°C, between 180°C and 400°C, between 180°C and 350°C, between 180°C and 300°C, between 180°C and 250°C, between 250°C and 400°C, between 250°C and 350°C, between 250°C and 300°C, between 300°C and 400°C.

In a particular embodiment, the hydrothermal reactor comprises a pressure-sealable reaction container and an HTC heating means. Preferably the heating means comprises an electromagnetic radiation generator or a resistive electric heating element.

In a particular embodiment, the hydrothermal reactor pressure is automatically or manually regulated by ingress or egress of gas into the hydrothermal reactor.

In a particular embodiment, the hydrothermal reactor pressure is autogenously regulated by modulation of the temperature of the hydrothermal reactor.

In a particular embodiment, the hydrochar or tar is produced by pressurising the biomass and aqueous solution to a pressure between 1000kPa and 40000kPa. In a particular embodiment, the pressure is selected from the group consisting of greater than 1000kPa, greater than 2000kPa, greater than 5000kPa, greater than 10000kPa, greater than 15000kPa, greater than 20000kPa, greater than 25000kPa, greater than 30000kPa, greater than 35000kPa, less than 40000kPa, less than 35000kPa, less than 30000kPa, less than 25000kPa, between 1000kPa and 40000kPa, between 1000kPa and 28000kPa, between 20000kPa and 40000kPa, between 20000kPa and 35000kPa, between 20000kPa and 30000kPa, between 25000kPa and 40000kPa, between 25000kPa and 35000kPa, between 25000kPa and 30000kPa, and between 30000kPa and 40000kPa.

In a particular embodiment, the reactor temperature and pressure is maintained for a period of between 5 minutes and 15 minutes. In an alternative embodiment, the period is selected from the group consisting of greater than 1 minute, greater than 5 minutes, greater than 10 minutes, greater than 15 minutes, greater than 30 minutes, greater than 1 hour, greater than 2 hours, greater than 6 hours, greater than 12 hours, less than 12 hours, less than 6 hours, less than 2 hours, less than 1 hour, less than 30 minutes, less than 15 minutes, less than 10 minutes, between 5 minutes and 30 minutes, between 5 minutes and 1 hour, between 5 minutes and 2 hours, between 5 minutes and 6 hours, between 5 minutes and 12 hours, between 10 minutes and 15 minutes, between 10 minutes and 30 minutes, between 10 minutes and 1 hour, and between 10 minutes and 2 hours.

Following the HTC treatment, the reaction is typically quenched with a coolant media to quench the reaction. The gases are then vented from the reactor by way of a gas outlet. Appropriate coolant media will be known to those of skill in the art. However, in particular embodiments, the coolant media comprises a refrigerant gas, dry ice, glycol or aqueous solution

The solids are separated from the aqueous phase which may be carried out according to known methods including filtration.

The hydrochar is then dried, preferably for a period sufficient to reduce the moisture content to a moisture content of less than 10%. At this moisture content, the graphitisation reaction should proceed efficiently. In a particular embodiment, the moisture content of the dried hydrochar is selected from the group consisting of less than 5%, less than 3%, less than 2%, less than 1%, between 0% and 10%, between 0% and 5%, between 0% and 2%, between 1% and 10%, between 1% and 5%, between 1% and 2%, between 2% and 10%, and between 2% and 5%. Preferably, the hydrochar is dried for a period of 12-24 hours.

In an alternative embodiment, the hydrochar is mechanically de-watered and optionally passed through a drying oven. The biomass may be fed to the HTC reactor in a continuous, batch or batch fed fashion. It will be appreciated that the hydrothermal carbonisation process may be used before any of the other graphitisation methods described herein.

It is preferable to use a char, tar or biomass for graphitisation that comprises a high fixed carbon content because any unconverted lignin will volatilise during the graphitisation reaction causing side-reactions to interfere with the main graphitisation reaction, and potentially introducing impurities to the graphite produced. Accordingly, the invention provides a method of improving the efficiency of char or tar graphitisation by using an HTC process to prepare the char or tar. This has the effect of increasing the fixed carbon content and porosity of the char.

Preferably the hydrochar comprises a fixed carbon content between about 64% to 82% dry ash-free basis. Preferably the hydrochar comprises a fixed carbon content between about 72% and 82%, greater than 64%, or greater than 72%.

The hydrochar or tar is transferred to a graphitisation reactor. Suitable transfer methods will be known to those of skill in the art. By way of example, transfer may be by manual handling or material transfer valve.

The inventors have developed a hydrothermal carbonisation (HTC) reactor which uses electromagnetic radiation to heat the reaction media. In a particular embodiment, the apparatus used to produce graphite includes a high pressure reactor. This reactor is typically rated to 1.5kW, 500oC and 350Bar although alternative reactor specifications will be known to those of skill in the art. The reactor thermally decomposes raw biomass into a semi-porous, partially carbonised charcoal. It may also be adapted to remove oxygen and associated volatile matter. Additionally, volatile matter (tars, water soluble chemical compounds) are recoverable as bio-derived products. Sufficient polar species are retained in the hydrochar to enable electromagnetic radiation coupling during graphitisation.

In a particular embodiment, the HTC heating means comprises an electromagnetic radiation generator. Preferably, the EMR generator comprises a magnetron oscillator. In a particular embodiment, the magnetron oscillator comprises a 30kW 915-922 MHz magnetron (National Panasonic). In alternative embodiments, a 896-922 MHz magnetron is used.

The reactor is rated to the power of the EMR source and will therefore vary. However, in a particular embodiment, the EMR HTC reactor is rated to 500°C and 35000kPa. The inventors have found that the EMR-heated HTC reactor has a number of advantages when compared to a conventionally heated reactor including a faster heating rate and an improved heating uniformity during the HTC reaction which results a more homogenous product.

A waveguide preferably transits microwave radiation from the microwave generator to the hydrothermal reactor. Suitable waveguides are described in relation to the graphitisation reactor.

In a particular embodiment, the graphite produced comprises an ash content selected from the group consisting of less than 1%, less than 0.9%, less than 0.8%, less than 0.7%, less than 0.6%, less than 0.5%, less than 0.4%, less than 0.3%, less than 0.2%, less than 0.1%.

In a further aspect, the invention provides a method for the conversion of biomass to graphite, the method comprising:
a. converting the biomass to hydrochar or tar in a hydrothermal reactor;
b. impregnating the hydrochar or tar with a catalyst;
c. heating the catalyst-treated hydrochar or tar to a temperature sufficient to produce graphite.
The conversion of biomass to graphite provides a useful alternative method for the production of synthetic graphite. It also provides a sustainable alternative to the use of fossil fuels for such purposes by enabling the use of biomass waste.

In a further aspect, the invention provides a system for the production of graphite, the system comprising:
a. a graphitisation reactor adapted to receive char, tar or biomass; and
b. a graphitisation heating means capable of heating the char, tar or biomass to a temperature sufficient to produce graphite.

In a particular embodiment, the system further comprises a hydrothermal reactor capable of producing hydrochar.

In a further aspect, the invention provides a method for the conversion of a carbon-containing compound to graphite, the method comprising heating the carbon-containing compound in the presence of a catalyst to produce graphite, wherein the catalyst is selected from the group consisting of manganous acetate (Mn(CH₃COO)₂) and nickel chloride (NiCl₂). The inventors have found that these two catalysts have particular utility in the conversion of carbon-containing compounds, especially char, tar or biomass, to graphite. As is outlined herein, these catalysts have utility in the production of graphite from biomass but they also have more general utility in the production of graphite that has been discovered by the inventors and not previously disclosed.

It will be understood by those of skill in the art that as well as the specifically recited and described components of the "system", the system may also comprise pipework, valves, wiring, inlets, outlets, controllers and other features that would be typically employed to enable the introduction and removal of biomass, and the heating of the reactors referred to herein. By way of example, the "system" may include power supplies, pressure release valves, temperature sensors, heat exchangers, filters, pressure sensors, gas flow sensors and pH sensors.

The specified features of the system combine to provide an alternative graphite production pathway as well as having advantages including increased energy efficiency, reduced wastage of feedstock material and a high quality homogenous graphite product.

The biomass of use in the invention may be from any source. It may be obtained as a byproduct of an industrial process for example timber production, paper production or agriculture. Depending on the composition of the biomass, it may be desirable to treat it to remove any undesired impurities, such as prior to use in the invention described herein.

In one embodiment, the system further comprises a chipper for chipping the biomass. In a particular embodiment, the biomass is chipped prior to entry to the HTC reactor. The chipper may be connected to the other components of the system. Alternatively, the chipper may be a separate standalone component of the system.

In an embodiment, the apparatus further comprises a feeding mechanism or an infeed hopper for feeding the biomass to the HTC reactor.

In one embodiment, the system further comprises a gas/vapour extraction system. The gas/vapour extraction system comprises a source of carrier gas to establish an inert atmosphere in the graphitisation rector and also to extract gases evolved from the char. The extraction system may further comprise a gas condenser suitable for condensing bio-oil(s) emitted in vapour form into condensate. In an embodiment, the condensate is collected in a suitable container associated with the gas condenser.

In a further embodiment, the method further comprises collecting vapour emitted from the char. In an embodiment, the method further comprises condensing the vapour into a condensate and collecting the condensate. The condensate is suitably collected in a container. In an embodiment, the condensate comprises bio-oils.

The invention has been described herein, with reference to certain preferred embodiments, in order to enable the reader to practice the invention without undue experimentation. However, a person having ordinary skill in the art will readily recognise that many of the components and parameters may be varied or modified to a certain extent or substituted for known equivalents without departing from the scope of the invention. It should be appreciated that such modifications and equivalents are herein incorporated as if individually set forth. Titles, headings, or the like are provided to enhance the reader's comprehension of this document, and should not be read as limiting the scope of the present invention.

The entire disclosures of all applications, patents and publications, cited above and below, if any, are hereby incorporated by reference. However, the reference to any applications, patents and publications in this specification is not, and should not be taken as, an acknowledgment or any form of suggestion that they constitute valid prior art or form part of the common general knowledge in any country in the world.

### EXAMPLES

The invention will now be described in more detail with reference to the following non-limiting examples.

### Example 1 - Production of hydrochar from biomass

### Materials and methods

An electrically heated Amar brand, Hydrothermal Carbonisation (HTC) high pressure reactor rated to 1.5kW, 500C, 350Bar was used to thermally decompose raw biomass into a semi-porous, partially carbonised charcoal (hydrochar). This process removes oxygen and associated volatile matter. The volatile matter (tars, water soluble chemical compounds) is recoverable as valued added bio-chemicals. A PID temperature controller was linked to the ceramic heater band power supply.

The process used to produce hydrochar was as follows:
a. 50g biomass (radiata pine sawdust), 90ml deionised water and 10ml acetic acid introduced to the HTC reactor;
b. Reactor sealed and bolted;
c. Heating commenced from ambient to 350°C and held at 350°C for 20minutes. Pressure=165 to 170Bar;
d. Reactor quenched with cold water to cease reaction;
e. Residual gas vented;
f. Reactor opened and contents transferred to global beaker;
g. Aqueous phase decanted to separate from solids;
h. Aqueous phase filtered through 1.5uM filter paper and reserved for analysis of biochemical profile;
i. Solids (Hydrochar) dried for 12-24hrs;

### Results

From a 50g sample of biomass, 18.6g of hydrochar was obtained. The fixed carbon content of this hydrochar was approximately 72.0% as measured by a CHN (flash combustion) Elemental Analyser - Carlo Erba, Model EA 1108.

### Conclusion

The HTC process to produce hydrochar provides a good yield of high carbon content, low ash char.

### Example 2 - Introduction of catalyst to hydrochar and graphitisation

### Materials and methods

The graphitisation reactor comprised a Cobcraft Electric furnace (pottery kiln) rated to 3kW, 1300C, 1ATM. The graphitisation rector used a PID temperature controller and contained a fused quartz sample holder. An inert atmosphere was provided by a nitrogen gas feed at 12L/min.

The method used to introduce the catalyst to the hydrochar was as follows:
a. Iron (III) Nitrate, 404g/mol. Diluted to 0.1M with H20;
b. 20g hydrochar added to solution;
c. Periodic stirring. Left for approx. 12 hours to soak;
d. Hydrochar separated from solution by decanting solution;
e. Filter solution through 1.5uM paper;
f. Dry Hydrochar in standard drying oven for 12-18hrs;

The method used for graphitisation of the catalyst impregnated hydrochar was as follows:
a. 20g hydrochar introduced to a quartz sample holder;
b. Sample holder introduced to furnace;
c. N₂ feed introduced through furnace wall into sample holder to create inert atmosphere;
d. Any gaps around sample holder sealed with ceramic paper;
e. Furnace lid sealed;
f. N2 flow set to 12LPM;
g. Furnace temperature set to 1300°C and heating commenced;
h. Furnace temperature raised to 1304°C;
i. Furnace heating switched off;
j. Lid unlocked and opened to cool;
k. Graphite sample recovered mass measured;
l. Graphite sample tested for electrical resistance using mulitmeter;
m. Graphite sample tested using quantitative X-Ray diffraction.

The method used for catalyst recovery was as follows:
a. 0.1M solution of HCL in water prepared;
b. Graphite sample soaked in HCL solution and left for approximately 12 hours;
c. Graphite sample recovered from HCL solution and washed in water column;
d. Graphite sample dried in standard drying oven for 12-24 hours.

The method used for quantitative X-Ray diffraction was as follows: Samples were milled using ceramic mortar and pestle. Samples were then sieved, particle size < 300 µM diameter were analysed using X-ray diffraction (XRD, D2 phaser -Bruker). Cu-Ka radiation with a wavelength 0.15419 nm was used in all the diffraction experiments. The diffraction patterns were obtained from20 to 80°, increment of 0.02 ° (2 Theta).

### Results

From 50g of biomass, 18.6g of hydrochar impregnated with catalyst was obtained. The hydrochar was still in its original form i.e. there was no morpohology change from a macroscopic perspective and the hydrochar did not appear to have dissolved.

From 18.6g of hydrochar, 10.5g of graphite was produced giving a yield of 57%.

Following recovery of the graphite sample, testing indicated that its resistance was less than 1 ohm. This tests for the removal of oxygen from the starting material to a point where there is substantially free electron flow in the carbon. This is a crude indicator that graphite is present.

X-Ray diffraction results are shown in figures 2 to 6.
a. Figure 5 shows a reference sample analysed using x-ray diffraction spectroscopy. In this pure graphite reference sample, the 0,0,2 miller index is very prominent compared to the 1,0,1 and the 0,0,4 peaks.
b. Figure 2 shows the XRD spectrum of a sample of graphite produced from a high purity (98.5% carbon) amorphous carbon sample by the graphitisation method described above. The miller index peaks indicative of graphite can clearly be seen.
c. Figure 3 shows an XRD spectrum of a sample prior to catalyst removal.
d. Figure 4 shows the same sample following catalyst removal. The same miller index peaks can be seen.

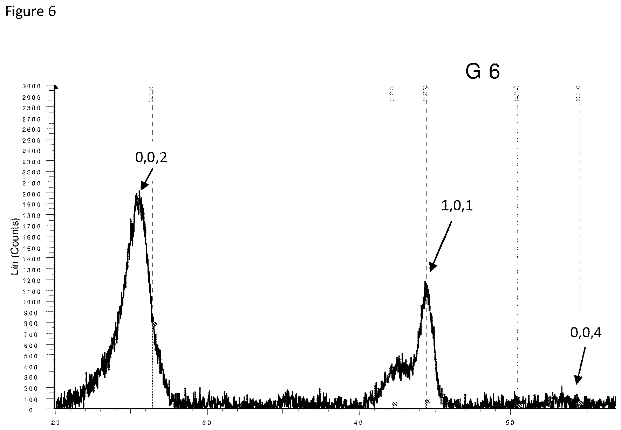

e. Figure 6 shows an XRD spectrum of a sample of biomass that has undergone HTC and graphitisation according to the methods described above. The same miller index peaks can be seen.
All samples demonstrate the presence of graphite.

### Conclusion

Resistance was less than 1 ohm indicating a high carbon content of the prepared products.

X-Ray diffraction results indicate that graphite has been produced.

Figure 3 shows an XRD trace of a sample taken from the graphite product sample G2.0 without acid wash. It can be seen that the trace is somewhat unclear. An HCl wash of a sample from the same product sample yielded a cleaner spectra (Figure 4) indicating the acid wash removes at least some amount of catalyst to provide a higher purity graphite sample.

Figure 6 shows that graphite is produced from a hydrochar produced from hydrothermal carbonisation.

### Example 3 - impregnation of catalyst during HTC

A char sample is subjected to HTC according to the method described in example 1. Instead of 90ml of deionised water, the solution is made up of two components:
a. 0.1M Iron (III) nitrate
b. Deionised water

The components are present in a ratio of from a:b 1:1 to 1:2. The mass of solution is approximately matched (i.e. 1:1) by an equal mass of radiate pine sawdust biomass. HTC is carried out to a temperature of approximately 350-400°C to partially carbonise the biomass. The catalyst is expected to uniformly impregnate the hydrochar prepared. Graphitisation is carried out according to the methods described above to yield a graphite sample. The impregnated catalyst is at least partially removed by an HCl acid wash as described above.

### Example 4 - Introduction of catalyst to hydrochar and graphitisation {increased Ferric Nitrate catalyst concentration and increased graphitisation temp}

### Materials and methods

In this example six pine hydrochar samples were impregnated with 1.0M Ferric Nitrate, graphitised at 1500C and 1800C then acid leached with 37% pure HCI.

Except from the concentration of catalysts, graphitisation temperature and concentration of acid leaching compound (HCl), the methodology applied is the same as example 2.

### Results

| **Rank #** | **Sample ref** | **d-spacing (nm)** | **Crystal Size (Angstroms)** | **Resistivity (Ohm.m)** | **XRD Spectra See Figure** |
|---|---|---|---|---|---|
| 1 | G17-K11500 | 0.3362 | 434.6 | <1 | 7 |
| 2 | G27-HTC1-K31800 | 0.3362 | 352.7 | <1 | 8 |
| 3 | G23-HTC1-K11800 | 0.3367 | 420.7 | <1 | 9 |
| 4 | G26-HTC1-K2 1800 | 0.3367 | 328.0 | <1 | 10 |
| 7 | G26-HTC1-K2 1500 | 0.3371 | 306.4 | <1 | 12 |
| 8 | G23-HTC1-K1 1500 | 0.3371 | 414.5 | <1 | 13 |
| 9 | G27-HTC1-K3 1500 | 0.3371 | 250.7 | <1 | 14 |

For all samples the interlayer d-spacing ranged from 0.3362nm to 0.3371nm. The range of d-spacing results are less than those calculated for example 1.

For all samples, the peak intensity of Miller Indices 0,0,2 at 26.5 degrees 2-Theta was greater than that of example 2, which indicates more pronounced graphite crystallinity.

For all samples, the Full Width and Half Maximum (FWHM) intensity of the X-Ray spectra at Miller Indices 0,0,2 was less than that of example 2, which indicates a larger average graphite crystal size.

### Conclusions

Graphite produced under these conditions was higher in quality than outlined in example 1 and was produced by increasing catalyst concentration and graphitisation temperature.

### Example 5 - Introduction of catalyst to hydrochar and graphitisation {new catalysts and higher graphitisation temperatures}

### Materials and methods

In this example three raw pine samples and three raw industrial hemp samples were impregnated with 0.1M of Nickel Chloride, Manganaous Acetate and Cobaltous Nitrate, graphitised at 1200C then acid leached with 37% pure HCl. Industrial hemp was included because it has a lower lignin content than pine. The lignin content of hemp is approximately 9%.

Except from the species of catalysts, inclusion of industrial hemp feedstock and concentration of acid leaching compound (HCl), the methodology applied is the same as example 2.

### Results

| **Rank #** | **Sample ref** | **Feedst ock** | **Catalyst** | **d-spacing(nm)** | **Crystal Size (Angstroms)** | **Crystallinity (%)** | **Resistivity (Ohm.m)** | **XRD Spectra See Figure** |
|---|---|---|---|---|---|---|---|---|
| 10 | G103-K1 | Hemp | NiCl2 | 0.3377 | 101.9 | 75.9 | <10 | 15 |
| 11 | G100-K1 | Pine | Mn(CH3COO)2 | 0.3394 | 94.1 | 78.2 | <10 | 16 |
| 12 | G105-K1 | Hemp | Co(NO3)2 | 0.3426 | 100.7 | 77.8 | <10 | 17 |
| 13 | G102-K1 | Pine | NiCl2 | 0.3431 | 103.3 | 74.7 | <10 | 18 |
| 14 | G101-K1 | Hemp | Mn(CH3COO)2 | 0.3470 | 159.4 | 77.4 | <10 | 19 |
| 15 | G104-K1 | Pine | Co(NO3)2 | 0.3492 | 104.6 | 78.5 | <10 | 20 |

Industrial hemp when treated with Nickel Chloride and graphitised at 1200C had a d-spacing of 0.3377nm. Industrial hemp when treated with Manganous Acetate and graphitised at 1200C had an average crystal size more than 56% larger than both pine and hemp samples treated with Nickel Chloride.

For all samples the average d-spacing was greater than that of the average d-spacing for samples outlined in example 4.

For all samples the average crystal size was less than that of the average crystal size for samples outlined in example 4.

### Conclusions

Graphite was produced using catalysts other than Ferric Nitrate. Industrial Hemp treated with manganous acetate resulted in a much larger average crystal size compared to all other samples in this example. We conclude that the increase in crystal size is due to three factors:
a. greater effectiveness of manganous acetate to precipitate graphite crystals;
b. hemp having a lower lignin content than pine;
c. in it's raw state, hemp has a greater porosity than pine.

### Example 6 - Introduction of catalyst to delignified hydrochar and graphitisation

### Materials and methods

In this example a single raw pine sample and single raw industrial hemp sample were first delignified in a 60/40 solution of Methanol/Water (with 2% ammonia solution) for 1 hour at 180°C. The samples were then converted to hydrochar, impregnated with Manganous acetate and then graphitised at 1800C. Following graphitisation the samples were acid leached with 37% pure HCI.

| **Sample ref** | **Raw Feedstock** | **Graphitisation Feedstock** | **Major Step 1** | **Major Step 2** | **Major Step 3** | **Major Step 4** |
|---|---|---|---|---|---|---|
| G118-L-HTC-K1 | Hemp Fibre | Hemp Fibre (Delignified) Hydrochar | Lignin Extraction-Methanol/Water (Amonnia Catalyst 2%) | Mn(CH3COO)2 | HTC | Kiln 1800 |
| G124-L-HTC-K1 | Radiata Pine | Radiata Pine (Delignified) Hydrochar | Lignin Extraction-Methanol/Water (Amonnia Catalyst 2%) | Mn(CH3COO)2 | HTC | Kiln 1800 |

### Results

Compared to Example 5, average crystal size had increased for the industrial hemp sample by 34% and 110% for Pine.

| **Sample ref** | **Calculted d spacing (nM)** | **Crystal Size (Angstroms)** | **XRD Spectra See Figure** |
|---|---|---|---|
| G118-L-HTC-K1 | 3.337 | 214 | 21 |
| G124-L-HTC-K1 | 3.369 | 188 | 22 |

### Conclusions

Compared to Example 5 better quality graphite has been produced using de-lignified feedstock that has then undergone hydrothermal treatment, impregnated with Manganous Acetate and graphitized at 1800C.

The invention further includes the subject matter of the claims of PCT/NZ2016/050016 from which this application is derived, the content of which is reproduced below as numbered paragraphs (para.).
1. A method of producing graphite comprising heating at least one of char, tar and biomass in the presence of a catalyst to a temperature sufficient to produce graphite, wherein the catalyst catalyses the conversion of the at least one of char, tar and biomass to graphite.
2. A method according to para. 1 wherein the char is hydrochar.
3. A method according to para. 1 or 2 wherein the catalyst is impregnated into the at least one of char, tar and biomass.
4. A method according to any one of the preceding paras. wherein the char has been delignified prior to graphitisation.
5. A method according to any one of the preceding paras. wherein the catalyst is selected from the group consisting of:
   a. a transition metal catalyst, wherein when the catalyst is in ionic form and reacts with hydrochloric acid to form a chloride salt;
   b. a transition metal catalyst which in ionic form has a valence of less than three;
   c. iron (III) nitrate;
   d. nickel nitrate;
   e. chromium nitrate;
   f. chromium chloride;
   g. manganous acetate;
   h. cobaltous nitrate;
   i. nickel chloride;
   or combinations thereof.
6. A method according to any one of the preceding paras. wherein the catalyst is introduced to the char, tar or biomass by treating the char or biomass with an aqueous solution containing the catalyst.
7. A method according to any one of the preceding paras. wherein the char, tar or biomass is heated by electromagnetic radiation.
8. A method according to any one of the preceding paras. wherein the method further comprises a step of removal of the catalyst from the graphite.
9. A method according to para. 8 wherein the concentration of the catalyst is reduced to less than 1% w/w catalyst to graphite.
10. A method according to any one of the preceding paras. wherein hydrochar or tar is produced from biomass by hydrothermal carbonisation.
11. A method according to para. 10 wherein the hydrochar or tar is produced by heating the biomass and aqueous solution under pressure to a temperature and pressure sufficient to produce hydrochar.
12. A method according to para. 11 wherein the catalyst is introduced to the biomass and aqueous solution prior to or during hydrothermal carbonisation.
13. A method according to any one of paras. 1 to 11 wherein the catalyst is introduced to the char, tar or hydrochar after production of said char, tar or hydrochar.
14. A method as described in any one of paras. 10 to 13 wherein the biomass and aqueous solution is heated by electromagnetic radiation.
15. A method according to any one of the preceding paras. wherein the graphite comprises a d-spacing of less than 0.34nm.
16. A system for the production of graphite, the system comprising:
   a. a hydrothermal reactor capable of producing hydrochar
   b. a graphitisation reactor adapted to receive the hydrochar from the hydrothermal reactor; and
   c. a graphitisation heating means capable of heating the char to a temperature sufficient to produce graphite.
17. A system as described in para. 16 wherein the graphitisation heating means comprises an electromagnetic radiation generator associated with the graphitisation reactor and adapted to, in use, apply electromagnetic radiation to the hydrochar.
18. A system as described in para. 17 wherein the electromagnetic radiation generator is associated with the graphitisation reactor by way of a waveguide.
19. A system as described in any one of the paras. 16 to 18 wherein the graphitisation reactor comprises an outer container and an electromagnetic cavity defining an inner portion of the reactor.
20. A system as described in any one of paras. 16 to 19 wherein the electromagnetic cavity is proportioned to act as a circular waveguide.
21. A system as described in para. 20 wherein the cavity sets up a TE₀₁₀ electromagnetic radiation propagation mode for heating the char.
22. A system as described in any one of paras. 16 to 21 wherein the hydrothermal reactor comprises a hydrothermal heating means comprising an electromagnetic radiation generator.
23. Graphite produced by a method as described in any one of paras. 1 to 15.
24. Graphite as described in para. 23 wherein the graphite comprises at least one of the features selected from the group consisting of:
   a. x-ray diffraction miller indices of 0,0,2, 1,0,1 and 0,0,4;
   b. inter-layer spacing of between 0.333nm and 0.337nm;
   c. crystal size of at least 0.246nm;
   d. proportion of crystallinity of between 67% to 99.9%;
   e. electrical resistivity of less than 50milliohmmetres (Ω·m).

## Claims

1. A method of producing graphite comprising heating by electromagnetic radiation using microwaves at least one of char, tar and biomass in the presence of a catalyst to a temperature sufficient to produce graphite, wherein the catalyst catalyses the conversion of the at least one of char, tar and biomass to graphite, wherein the catalyst is introduced to the at least one of char, tar and biomass by treating the at least one of char, tar and biomass with an aqueous solution containing the catalyst; and wherein the graphite comprises a d-spacing of less than 0.34nm.

2. A method according to claim 1 wherein the char is hydrochar.

3. A method according to any one of the preceding claims wherein the catalyst is selected from the group consisting of:
a. a transition metal catalyst, wherein when the catalyst is in ionic form and reacts with hydrochloric acid to form a chloride salt;
b. a transition metal catalyst which in ionic form has a valence of less than three;
c. iron (III) nitrate;
d. nickel nitrate;
e. chromium nitrate;
f. chromium chloride;
g. manganous acetate;
h. cobaltous nitrate;
i. nickel chloride;
or combinations thereof.

4. A method according to any one of the preceding claims wherein the char, tar or biomass is heated by electromagnetic radiation and conventional heating means.

5. A method according to any one of the preceding claims wherein the method further comprises a step of removal of the catalyst from the graphite.

6. A method according to claim 5 wherein the concentration of the catalyst is reduced to less than 1% w/w catalyst to graphite.

7. A method according to any one of the preceding claims wherein hydrochar or tar is produced from biomass by hydrothermal carbonisation.

8. A method according to claim 7 wherein the catalyst is introduced to the biomass and aqueous solution prior to or during hydrothermal carbonisation.

9. A method according to any one of the preceding claims wherein the temperature sufficient to produce graphite is greater than 1000 degrees C.

10. A method according to any of the preceding claims wherein the frequency of the electromagnetic radiation applied is between 896 MHz to 922 MHz.

11. A method according to any one of the preceding claims wherein the method is carried out in a graphitisation reaction pressurised up to 30 bar.
